(19) Europäisches Patentamt
European Patent Office
Office européen des brevets

(11) **EP 2 299 073 B1**

(12) **EUROPEAN PATENT SPECIFICATION**

(45) Date of publication and mention of the grant of the patent:
**22.08.2012 Bulletin 2012/34**

(51) Int Cl.:
*F01N 3/01* (2006.01)     *F01N 3/08* (2006.01)
*F01N 3/027* (2006.01)

(21) Application number: **10251499.9**

(22) Date of filing: **26.08.2010**

(54) **Exhaust gas treatment apparatus**

Abgasbehandlungsvorrichtung

Appareil de traitement des gaz d'échappement

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.08.2009 JP 2009199401**

(43) Date of publication of application:
**23.03.2011 Bulletin 2011/12**

(73) Proprietor: **NGK Insulators, Ltd.**
**Nagoya-city, Aichi 467-8530 (JP)**

(72) Inventors:
• **Tokuda, Masahiro**
**Nagoya City**
**Aichi-ken, 467-8530 (JP)**
• **Sakuma, Takeshi**
**Nagoya City**
**Aichi-ken, 467-8530 (JP)**
• **Egami, Takashi**
**Nagoya City**
**Aichi-ken, 467-8530 (JP)**
• **Kondo, Atsuo**
**Nagoya City**
**Aichi-ken, 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A1- 1 528 230**     **DE-A1- 3 314 170**
**DE-A1-102004 048 488**

**Description**

Background of the Invention and Related Art Statement

The present invention relates to an exhaust gas treatment apparatus. More specifically, the present invention relates to exhaust gas treatment apparatus capable of decreasing the number of the particulates present in exhaust gas by agglomerating the particulate matter contained in the exhaust gas.

There is increased need to remove particulate matter and harmful substances in exhaust gas discharged from internal combustion engines such as automobile engines, construction machine engines; industrial machine stationary engines and other combustion burning appliances; and the like in consideration of influence on the environment. In particular, in recent years, the regulations regarding the removal of the particulate matter (hereinbelow sometimes referred to as "PM") contained in exhaust gas have had a tendency to be strengthened on a global basis.

As an exhaust gas treatment apparatus for treating exhaust gas containing PM as described above, there is disclosed, for example, an apparatus where PM is electrically collected by adsorbing PM onto a positively electrified body with negatively electrifying the PM by the electrified body after the PM is agglomerated by allowing the PM to collide against a collision guide member provided inside the flow passage where exhaust gas passes (see, e.g., JP-A-2001-41024). The PM passed through the positively electrified body is collected in the filter downstream and incinerated and removed by applying current to the positively electrified body to allow it to function as a heater.

Such an exhaust gas treatment apparatus has a defect of increase in pressure loss because of complex flow passage constitution, and manufacturing of the apparatus is not easy. In addition, since sufficient agglomeration effect cannot be obtained, the particulate matter passes through the apparatus and is released without being agglomerated.

From such problems, there is disclosed an exhaust gas treatment apparatus provided with an agglomerator which electrifies particulate matter in exhaust gas by charge by corona discharge and agglomerates the particulate matter in an electrode collecting the charge by disposing two kinds of electrodes of charge emission and charge collection communicating the charge by corona discharge due to the application of a high voltage between them as an agglomerator for agglomerating particulate matter (PM) in exhaust gas in an exhaust gas passage which is formed by an exhaust pipe of an internal combustion engine and where exhaust gas circulates in the axial direction of the exhaust pipe in such a manner that a charge communication portion of the first electrode is located in almost the central portion in the diametral direction of the exhaust gas passage (see, e.g., JP-A-2005-320955).

In addition, as an agglomerator for exhaust gas treatment apparatus used for an exhaust gas treatment apparatus as described above and agglomerating the exhaust gas PM charged by corona discharge by an agglomeration portion, there is disclosed an agglomerator for an exhaust gas treatment apparatus provided with the first conductive body disposed on the downstream side of the exhaust gas stream of the electrified portion in the agglomeration portion with applying a voltage to the first conductive body to have a positive electric potential (see, e.g., JP-A-2005-324094).

Further, there is disclosed an exhaust gas purification apparatus provided with a PM agglomeration means generating particulate matter (agglomerated PM) having a large particle diameter by agglomerating the particulate matter contained in exhaust gas of an engine and PM trapping means disposed downstream of the exhaust gas flow direction of the PM agglomeration means and trapping the agglomerated PM agglomerated by the PM agglomeration means (see, e.g., JP-A-2006-29267).

However, in an exhaust gas treatment apparatus described in the JP-A-2005-320955, since the electrode for discharge and one of a pair of electrodes for generating an electric field for collecting particulate matter are constituted of the same electrode, in the case that the other electrode in the pair of electrodes for generating an electric field is disposed on the downstream side of the flow passage, charged particulate matter is accelerated by the electric field and passes through without being trapped by the other electrode. Therefore, in the case of such a constitution, there is a problem that the effect in agglomerating the particulate matter is small to be almost impossible to agglomerate the particulate matter practically.

In addition, in the exhaust gas treatment apparatus described in the JP-A-2005-320955, there is a description of utilizing the other electrode in the pair of electrodes for generating an electric field as an inner wall face of the flow passage. In such a case, the range where an electric field having strength sufficient for trapping particulate matter is generated is extremely narrow, and the particulate matter always moving toward the downstream side on stream of exhaust gas easily passes through the range of the electric field. Therefore, even in such a case, there is a problem that the effect in agglomerating the particulate matter is small to be almost impossible to agglomerate the particulate matter practically. In particular, in a case that the exhaust gas flow rate is high or that the number of the particulates contained in exhaust gas is small, it is very difficult to trap the particulate matter on the inner wall face of the flow passage.

In addition, in the agglomerator for an exhaust gas treatment apparatus described in the JP-A-2005-324094, a high voltage is applied to the first conductive body constituting the agglomeration portion to draw the electrified particulate matter. It can shorten the moving distance of the electrified particulate matter and has high agglomeration effect in comparison with the exhaust gas treatment apparatus disposed in the JP-A-2005-320955. However, there is a problem that constitution of the electrode (the electrified portion and the agglomeration portion) is extremely complex to make it difficult to use it for an automobile or the like where large vibrations and the like are applied.

In addition, a PM agglomeration means used for the exhaust gas purification apparatus described in the JP-A-2006-29267 accelerates the particulate matter in the exhaust gas flow direction like the exhaust gas treatment apparatus described in the JP-A-2005-320955. Therefore, there is a problem that the effect in agglomerating the particulate matter is small to be almost impossible to agglomerate the particulate matter practically.

Further, the exhaust gas treatment apparatuses described in the aforementioned JP-A-2005-320955, JP-A-2005-324094, and JP-A-2006-29267 have been developed in order to treat exhaust gas containing a relatively large amount of particulate matter of a diesel engine or the like. In the case of using them for a gasoline engine or the like having a small number of the particulates in exhaust gas in comparison with a diesel engine or the like, the number of the particulates to be agglomerated is small, and the particle diameters of the particulates are small. Therefore, the effect in agglomerating the particulate matter is further reduced.

In particular, a new standard, by NEURO 6 is supposed to be applied as an exhaust gas regulation from 2012, and there is desired the development of an exhaust gas treatment apparatus capable of corresponding with a vehicle provided with a gasoline engine as a driving mechanism. In particular, since a gasoline engine has a low torque, if a filter increasing pressure loss of exhaust gas is disposed in an exhaust system, knocking is easily caused to cause an engine trouble or the like. Therefore, there is desired the development of an exhaust gas treatment apparatus provided with a mechanism which hardly charge a burden on an engine or the like.

In addition, when a filter is disposed in an exhaust system of a gasoline engine to run over a long distance, deposition of ash derived from components contained in a gasoline of a fuel becomes a serious problem. Since ash does not disappear even when high-temperature regeneration (burning) is performed in a filter unlike the PM, clogging is caused in the filter as a result to cause the increase in pressure loss.

EP 1 528 230 describes several different exhaust particle agglomeration and separation systems. The basic structure of the agglomeration part of the devices is common to each. Gas flows through an inlet, into an agglomeration space. Also in that space is positioned an electrode, which expends to and is plugged into an insulating part of a 'capping' disc. The outer part of the agglomeration space is an external electrode. That is made up of a porous material. Particles flowing into the agglomeration space are charged by the electrode, and thereby drawn to the external electrode.

As the charged particles reach the external electrode, they are deposited onto the porous maternal. Gradually, more particles are deposited and agglomerate with those previously deposited, until the agglomerates are large enough that friction from the gas flow pulls them off. The agglomerated particles then move, with the exhaust gas, into the main cavity.

After that, gas flow is to the separation part of the device. As one example an electrical separator is shown. It has an electrode running through the centre. As gas and agglomerate particles reach it, the electric field of the electrode deviates the path of the agglomerated particles to the sides of the separator. There are positioned perforated discs, which trap the agglomerated particles. A heater allows the trapped particles to be burnt off.

Summary of the Invention

The preset invention has been made in order to solve the aforementioned problems of prior art and aims to provide an exhaust gas treatment apparatus capable of decreasing the number of the particulates contained in exhaust gas by agglomerating the particulate matter contained in the exhaust gas.

As a result of earnest studies by the present inventors in order to solve the aforementioned problems of prior art, they found out that the problems can be solved by decreasing the number of particulates present in the exhaust gas by charging the particulate matter contained in the exhaust gas by discharge, collecting the charged particulate matter on the inner wall face of a flow passage by the electric field generated over the range of the predetermined length from the central portion of the flow passage where exhaust gas passes toward the inner wall face, and allowing the agglomeratedparticulate matter to scatter again; which led to the completion of the present invention. More specifically, according to the present invention, the following exhaust gas treatment apparatuses are provided.

An exhaust gas treatment apparatus comprising: a tubular body functioning as a flow passage where exhaust gas passes, a discharge electrode disposed in an central portion in a cross section perpendicular to a flow direction of the flow passage inside the tubular body and causing corona discharge in the vicinity thereof by applying a voltage, and a stick-shaped dust collection electrode disposed over the range of a length of at least twice the inner diameter of the tubular body along the central axial direction of the flow passage on the downstream side of the discharge electrode in the flow passage and generating an electric field from the central axis of the flow passage to an inner wall face of the tubular body; wherein the number of the particulates suspended in the exhaust gas is decreased by charging the particulate matter contained in the exhaust gas passing through the tubular body by corona discharge caused by the discharge electrode, collecting the charged particulate matter on the inner wall face of the tubular body by the electric field generated by the dust collection electrode to agglomerate the plural particulates, and allowing the agglomerated particulates to scatter again.

The exhaust gas treatment apparatus according to [1], wherein the length in the central axial direction of the flow passage of the dust collection electrode is within the range of twice to five times the inner diameter of the tubular body.

The exhaust gas treatment apparatus according to [1] or [2], wherein the discharge electrode has a disc-like electrode support disposed perpendicularly to the flow direction of the flow passage and a needle-like discharger disposed perpendicularly to the electrode support.

The exhaust gas treatment apparatus according to any one of [1] to [3], wherein the discharge electrode and the dust collection electrode are disposed in an electrically connected state, and a voltage is applied to one of the discharge electrode and the dust collection electrode to apply a voltage on each of the electrodes.

The exhaust gas treatment apparatus according to any one of [1] to [3], wherein the discharge electrode and the dust collection electrode are disposed in an electrically connected state, and a voltage is applied to each of the electrodes independently.

The exhaust gas treatment apparatus according to any one of [1] to [5], wherein the dust collection electrode is formed so that a diameter in a cross section perpendicular to the flow direction of the flow passage is 0.1 to 0.5 times the inner diameter of the tubular body.

The exhaust gas treatment apparatus according to any one of [1] to [6], which is further provided with a second discharge electrode disposed in the central portion in a cross section perpendicular to the flow direction of the flow passage on the downstream side of the tip on the flow passage upstream side of the dust collection electrode and causing corona discharge in the vicinity thereof by applying a voltage.

The exhaust gas treatment apparatus according to any one of [1] to [7], wherein at least one of the discharge electrode and the dust collection electrode is supported in the central portion of the fluid passage by a porcelain bushing passing through the wall face of the tubular body and being extended up to the central portion in a cross section perpendicular to the flow direction of the flow passage.

The exhaust gas treatment apparatus according to [8], wherein the porcelain bushing has a groove-shaped unevenness formed on the surface thereof.

An exhaust system of a vehicle provided with a gasoline engine as a drive mechanism and including an exhaust gas treatment apparatus according to any one of [1] to [9].

An exhaust gas treatment apparatus of the present invention can decrease the number of the particulates present in exhaust gas by agglomerating the particulate matter contained in exhaust gas. In particular, since an exhaust gas treatment apparatus of the present invention can decrease the number of the particulates even without disposing a filter or the like causing increase in pressure loss of the exhaust system, it can suitably be used as an exhaust gas treatment apparatus for treating exhaust gas discharged from a gasoline engine or the like where a harmful influence is caused by disposing a filter or the like causing increase in pressure loss.

Brief Description of the Drawings

[Fig. 1] Fig. 1 is a side view schematically showing an embodiment of an exhaust gas treatment apparatus of the present invention.

[Fig. 2] Fig. 2 is a plan view from the upstream side of the exhaust gas treatment apparatus shown in Fig. 1.

[Fig. 3] Fig. 3 is a cross-sectional view showing the A-A' cross section of the exhaust gas treatment apparatus shown in Fig. 2.

[Fig. 4] Fig. 4 is an explanatory view schematically explaining the process of treating exhaust gas by one embodiment of an exhaust gas treatment apparatus of the present invention.

[Fig. 5] Fig. 5 is a front view schematically showing an example of a discharge electrode used for an exhaust gas treatment apparatus of the present invention.

[Fig. 6] Fig. 6 is a side view of the discharge electrode shown in Fig. 5.

[Fig. 7] Fig. 7 is a cross-sectional view showing another embodiment of an exhaust gas treatment apparatus of the present invention.

[Fig. 8] Fig. 8 is an explanatory view schematically explaining the process of treating exhaust gas by another embodiment of an exhaust gas treatment apparatus of the present invention.

[Fig. 9] Fig. 9 is a side view schematically showing an example of a porcelain bushing used for an exhaust gas treatment apparatus of the present invention.

[Fig. 10] Fig. 10 is a top view of the porcelain bushing shown in Fig. 9.

[Fig. 11] Fig. 11 is a side view schematically showing another example of a porcelain bushing used for an exhaust gas treatment apparatus of the present invention.

[Fig. 12] Fig. 12 is a top view of the porcelain bushing shown in Fig. 11.

[Fig. 13] Fig. 13 is a cross-sectional view showing still another embodiment of an exhaust gas treatment apparatus of the present invention.

[Fig. 14] Fig. 14 is an explanatory view schematically explaining the process of treating exhaust gas by another embodiment of an exhaust gas treatment apparatus of the present invention.

[Fig. 15A] Fig. 15A is a graph showing the change of the number of the particulates on the outlet side of the exhaust gas treatment apparatus of Example 1.

[Fig. 15B] Fig. 15B is a graph showing the change of the number of the particulates on the outlet side of the exhaust gas treatment apparatus of Example 1.

[Fig. 15C] Fig. 15C is a graph showing the change of the number of the particulates on the outlet side of the exhaust gas treatment apparatus of Example 1.

[Fig. 15D] Fig. 15D is a graph showing the change of the number of the particulates on the outlet side of the exhaust gas treatment apparatus of Example 1.

[Fig. 16] Fig. 16 is a graph showing an enlarged portion showing the number of the particulates of 0.07 to 6.27 $\mu$m in a graph shown in Fig. 15.

[Fig. 17A] Fig. 17A is a graph showing the measurement results for 10 seconds of each particle diameter in measurement of the number of the particulates.

[Fig. 17B] Fig. 17B is a graph showing enlarged results of the measurement of the number of the particulates having a particle diameter of 0.20 to 6.27 $\mu$m in Fig. 17A.

[Fig. 17C] Fig. 17C is a graph showing an enlarged results of the measurement of the number of the particulates having a particle diameter of 1.23 to 6.27 $\mu$m in Fig. 17A.

[Fig. 18A] Fig. 18A is a graph showing the change ratio (%) of the number of the particulates having a particle diameter of 0.01 to 0.70 $\mu$m.

[Fig. 18B] Fig. 18B is a graph showing the change ratio (%) of the number of the particulates having a particle diameter of 1.23 to 3.06 $\mu$m.

Reference Numerals

1a, 1b, 1c: exhaust gas treatment apparatus, 10: tubular body, 10a: inner wall face, 12: discharge electrode, 12a: electrode support, 12b: discharger (needle-like discharger), 14: dust collection electrode, 16: porcelain bushing, 18, 19: voltage introduction portion, 20: exhaust gas, 22: particulate matter, 22a: particulate matter (charged particulate matter), 22b: particulate matter (agglomerated particulate matter), 24: corona discharge, 26: electric field, 32: second discharge electrode, 34: unevenness

Detailed Description of the Invention

Embodiments for carrying out the present invention will be described with referring to drawings. However, the present invention is by no means limited to these embodiments, and, needless to say, various changes, modifications, and improvement may be made on the basis of knowledge of a person of ordinary skill in the art as long as they do not deviate from the scope of the present invention.

[1] Exhaust gas treatment apparatus:

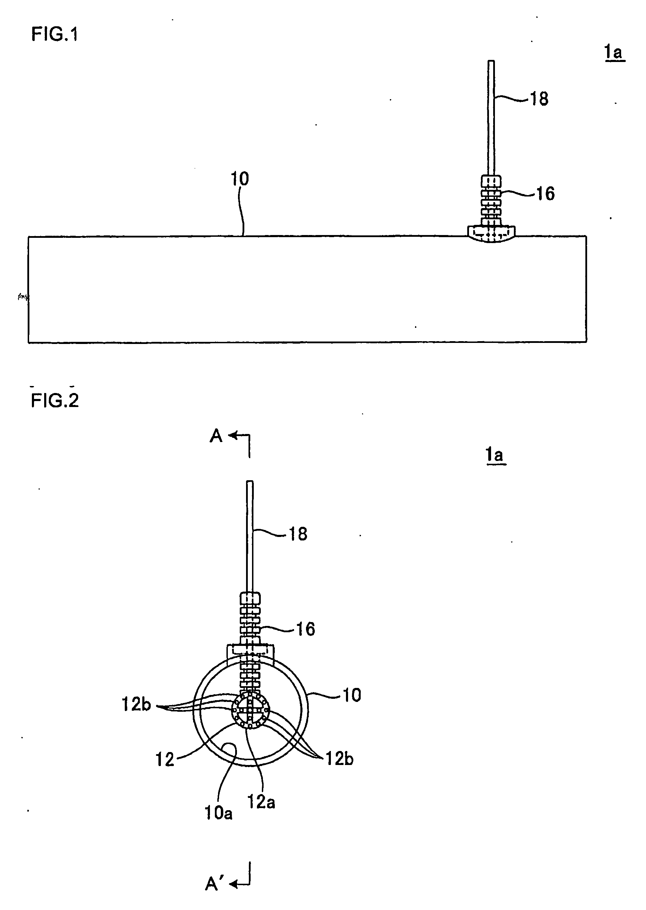

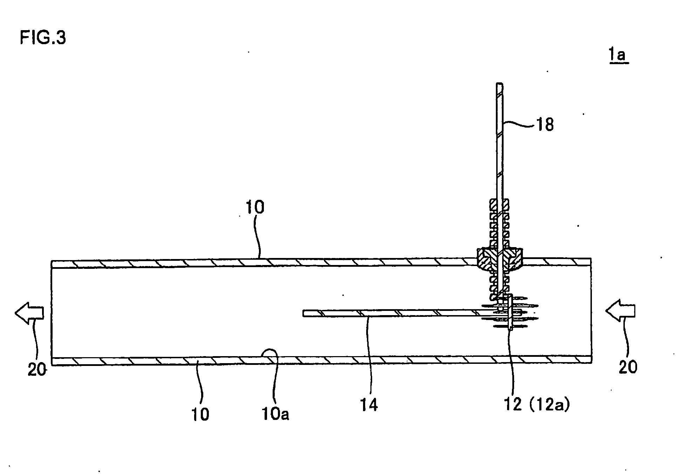

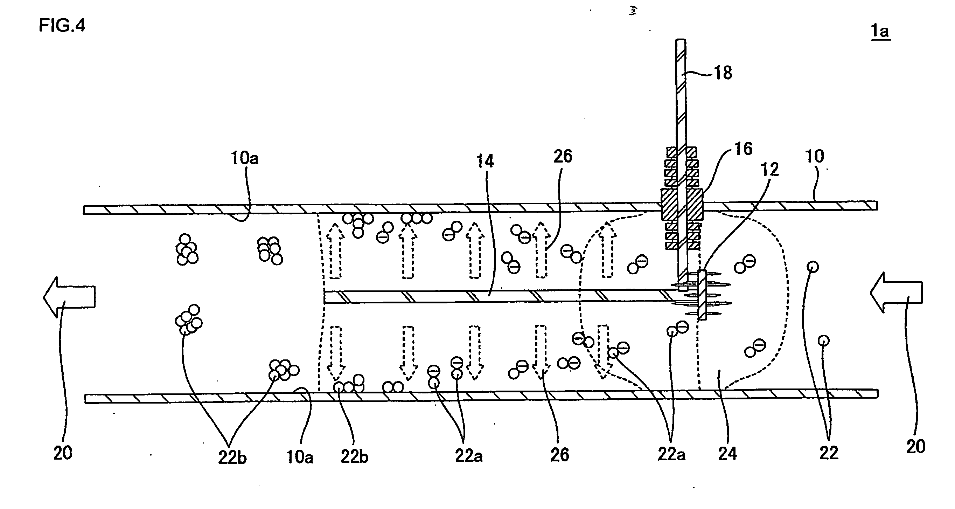

Fig. 1 is a side view schematically showing an embodiment of an exhaust gas treatment apparatus of the present invention, Fig. 2 is aplanview from the upstream side of the exhaust gas treatment apparatus shown in Fig. 1, Fig. 3 is a cross-sectional view showing the A-A' cross section of the exhaust gas treatment apparatus shown in Fig. 2, and Fig. 4 is an explanatory view schematically explaining the process of treating exhaust gas by one embodiment of an exhaust gas treatment apparatus of the present invention. Incidentally, Fig. 4 is a cross-sectional view showing an enlarged portion of a cross-sectional view shown in Fig. 3.

As shown in Figs. 1 to 4, the exhaust gas treatment apparatus 1a of the present embodiment is provided with a tubular body 10 functioning as a flow passage where exhaust gas 20 passes, a discharge electrode 12 disposed in an central portion in a cross section perpendicular to a flow direction of the flow passage inside the tubular body 10 and causing corona discharge 24 in the vicinity thereof by applying a voltage (specifically, high voltage), and a stick-shaped dust collection electrode 14 disposed over the range of a length of at least twice the inner diameter of the tubular body 10 along the central axial direction of the flow passage on the downstream side of the discharge electrode 12 in the flow passage and generating an electric field from the central axis of the flow passage to the inner wall face 10a of the tubular body 10.

The exhaust gas treatment apparatus 1a of the present embodiment charges the particulate matter 22 contained in exhaust gas 20 passing through the tubular body 10 by corona discharge 24 caused by the aforementioned discharge electrode 12, collects the charged particulate matter 22a on the inner wall face 10a of the tubular body 10 by the electric field 26 generated by the dust collection electrode 14 to agglomerate plural particulates 22a, and allows the agglomerated particulates 22b to scatter again, thereby decreasing the number of the particulates 22 suspended in the exhaust gas 20.

Incidentally, the electric field 26 generated by the dust collection electrode 14 is radially generated in a cross section of the flow passage over the entire region in the flow direction of the range of the length of the dust collection electrode 14 disposed therein. The arrows with dotted lines shown by the number 26 in Fig. 4 show the direction of the electric field 26 generated by the dust collection electrode 14.

The particulate matter 22a drawn to the inner wall face 10a of the tubular body 10 by the electric field 26 communicates charge by being brought into contact with the tubular body 10 and trapped (i.e. , dust collection) on the inner wall face 10a of the tubular body 10. In such a manner, the charged particulate matter 22a is drawn to the inner wall face 10a of the tubular body 10 in sequence. The trapped plural particulates are agglomerated by the Coulomb's force to form an aggregate of the plural particulates 22b. Then, the particulates 22b bloated by agglomeration up to a certain size has increased mass and is unable to stay (i.e. to keep being trapped) on the inner wall face 10a of the tubular body 10 to be discharged toward the downstream side on stream of the exhaust gas 20. Thus, the apparent number of the particulates 22 present in the exhaust gas 20 is decreased.

Thus, the exhaust gas treatment apparatus of the present embodiment traps the particulate matter contained in the exhaust gas on the inner wall face of the tubular body by charging the particulate matter to agglomerate plural particulates to be bloated, followed by allowing the particulate matter to scatter again, thereby decreasing the number (apparent number) of the particulate matter in the exhaust gas. In particular, the exhaust gas treatment apparatus of the present embodiment can decrease the number of the particulates even without disposing a filter or the like causing rise in pressure loss of the exhaust system and can agglomerate the particulate matter in a good condition even in the case that the number of the particulates of the exhaust gas is small. For example, not only as the apparatus for treating exhaust gas containing particulate matter in a relatively large amount such as a diesel engine, but also as the apparatus for treating exhaust gas discharged from a gasoline engine, it can suitably be used. Incidentally, the aforementioned "apparent number" means the number of the particles bloated by agglomerating plural particulates when each of the bloated particles is counted as one.

Incidentally, conventionally, there has been proposed an exhaust gas treatment apparatus (see, e.g., the aforementioned JP-A-2005-320955) where plural particulates are agglomerated. In such an exhaust gas treatment apparatus, since the electrode for discharge and one of a pair of electrodes for generating an electric field for collecting particulate matter are constituted of the same electrode, in the case that the other electrode in the pair of electrodes for generating an electric field is disposed on the downstream side of the flow passage, charged particulate matter is accelerated by the electric field and passes through without being trapped by the other electrode. Therefore, it is almost impossible to agglomerate the particulate matter practically.

In addition, in such a conventional exhaust gas treatment apparatus, there has been proposed the usage of the other electrode in the pair of electrodes for generating an electric field as the inner wall face of the flow passage. However, the range where an electric field having strength sufficient for trapping particulate matter is generated is extremely narrow, and the particulate matter always moving toward the downstream side on stream of exhaust gas easily passes through the range of the electric field. Therefore, it is almost impossible to agglomerate the particulate matter practically. In particular, in a case that the exhaust gas flow rate is high or that the number of particulates contained in exhaust gas is small, it is very difficult to agglomerate the particulate matter.

As shown in Figs. 1 to 4, in the exhaust gas treatment apparatus of the present embodiment, a stick-shaped dust collection electrode 14 generating an electric field from the central axis of the flow passage to the inner wall face 10a of the tubular body 10 is disposed along the central axial direction of the flow passage on the downstream side of the discharge electrode 12 to be able to trap the particulate matter 22a charged by corona discharge caused by the discharge electrode 12 on the inner wall face 10a of the tubular body 10 in a good condition. In particular, by controlling the length to be at least twice the inner diameter of the tubular body 10, there can be secured a distance capable of sufficiently drawing even the particulate matter 20 (more specifically, charged particulate matter 22a) moving in the vicinity of the central axis of the flow passage up to the inner wall face 10a of the tubular body 10. In addition, since the particulate matter 22a is trapped on the inner wall face 10a of the tubular body 10, the pressure loss of the exhaust system can be reduced.

Incidentally, in the case that the length of the dust collection electrode 14 is below twice the inner diameter of the tubular body 10, the length range where the electric field 26 generated in the flow direction of the exhaust gas 20 (i.e., range were the electric field 26 effective for drawing the particulate matter 22a is generated) is narrow, and effect in agglomerating the particulate matter 22a cannot be obtained sufficiently. That is, a large number of particulates among the particulate matter 22a moving toward downstream side pass the aforementioned range where the effective electric field 26 is generated before the particulates are drawn up to the inner wall face 10a of the tubular body 10 and discharged toward the downstream side without being agglomerated.

Incidentally, regarding the length of the dust collection electrode, it is preferably 2 to 5 times, more preferably 3 to 4 times, the inner diameter of the tubular body. Such a constitution enables to agglomerate particulate matter in a good condition and to inhibit growing in size of the apparatus. For example, when the length of the dust collection electrode 14 is above five times the inner diameter of the tubular body, the dust collection electrode becomes too long, and the size of the apparatus becomes large, which makes installation in an exhaust system of an automobile or the like difficult. In addition, when the length is above five times the inner diameter, there are increased the cases where the particles scattered by scattering again are trapped again on the inner wall of the tubular body. Even in such a case, the effect in decreasing the substantive number of particles can not be expected.

Incidentally, when the length of the dust collection electrode is at most five times the inner diameter of the tubular body, though it depends on the number of a very large number of particles in the charged particulates, for example, the number of particulates in exhaust gas and the flow rate of exhaust gas, in a general vehicle provided with a gasoline engine as a drive mechanism, about 90% reduction (in terms of the number) is possible by once trapping particles in the exhaust gas and agglomerating the particulate matter.

Incidentally, as a method for confirming the decrease in the number of the particulates in exhaust gas by the exhaust gas treatment apparatus of the present embodiment, a particle counter is disposed on the downstream side of the dust collection electrode of the exhaust gas treatment apparatus to measure the number of the particulates in the exhaust gas. An example of the aforementioned particle counter is the Electrical Low Pressure Impactor (hereinbelow sometimes referred to as "ELPI") produced by Dekati Ltd. According to such ELPI, measurement (sampling) of the number of particulates having a particle diameter of 0.007 to 10 $\mu$m in the particulate matter is possible. Incidentally, upon measurement, the particulates are classified by the following particle diameters: 0.007 to 0.014, 0.014 to 0.0396, 0. 0396 to 0.0718, 0.0718 to 0.119, 0.119 to 0.200, 0.200 to 0.315, 0.315 to 0.482, 0.482 to 0.760, 0.760 to 1.23, 1.23 to 1.95, 1.95 to 3.08, 3.08 to 6.27 (unit of $\mu$m).

As a more specific measurement method, in the first place, a particle counter is disposed on the downstream side of the dust collection electrode of the exhaust gas treatment apparatus, and the number of the particulates in the exhaust gas is measured (sampled) in each of the case of applying a voltage in each of the electrodes (upon applying a voltage) and the case of applying no voltage (upon applying no voltage). Next, from the sum of the measurement data by each particle diameter range, the total number (total discharge number) of the particulates discharged from the downstream side is calculated out. Next, from the data of the total discharge number at each of the time of applying a voltage and the time of applying no voltage, the ratio of the number of the particulates reduced by the exhaust gas treatment apparatus of the present embodiment can be obtained.

In the case of treating exhaust gas by the use of an exhaust gas treatment apparatus of the present embodiment, there is no particular limitation on the flow rate of the exhaust gas to be treated, and the number of the particulates can be decreased in a good condition with an exhaust gas flow rate of, for example, 200 m/second or less. Incidentally, since the exhaust gas flow rate upon running of a general vehicle provided with a gasoline engine as a drive mechanism is 150 m/second (in the case of 2L engine, 6000 revolutions, and exhaust gas temperature of about 600°C), even in such a vehicle, the treatment of exhaust gas can be performed in a good condition by the use of the exhaust gas treatment apparatus of the present embodiment.

Hereinbelow, the exhaust gas treatment apparatus of the present embodiment will be described in more detail by each of the constituents.

[1-1] Tubular body:

The tubular body is connected to an exhaust system where exhaust gas being discharged from an internal combustion engine or the like and containing particulate matter passes to function as a flow passage where exhaust gas passes. Such a tubular body may be connected independently to the exhaust pipe for discharging exhaust gas from the internal engine, or a part of the exhaust pipe provided on the internal combustion engine may be used as the tubular body in the exhaust gas treatment apparatus of the present embodiment.

In the exhaust gas treatment apparatus of the present embodiment, a discharge electrode and a dust collection electrode are disposed inside the tubular body, and inside of the tubular body is conducted a treatment where (1) the particulate matter is charged by corona discharge, (2) the charged particulate matter is trapped on the inner wall face of the tubular body by an electric field, (3) plural trapped particulates are agglomerated, and (4) the agglomeratedparticulates are scattered again.

Such a tubular body is used as not only a flow passage where exhaust gas passes, but also the opposed electrode to generate an electric field between the electrode and the dust collection electrode. Therefore, the tubular body is preferably constituted of a conductive material. Further, such a tubular body can be used also as the opposed electrode of the discharge electrode. Incidentally, when the tubular body is used as the opposed electrode of the dust collection electrode or the like, the tubular body is preferably grounded.

As the tubular body, there can suitably be used a body made of a conductive material such as stainless and iron used for an exhaust pipe of an automobile.

There is no particular limitation on the length of the tubular body as long as the tubular body has a length where the discharge electrode and the dust collection electrode having a predetermined length are disposed and where the exhaust gas treatment from the charge of the particulate matter to the re-scattering of the aforementioned (1) to (4) can be performed in the tubular body.

In addition, the tubular body preferably has a cylindrical shape having a straight central axis. Such a constitution can effectively inhibit rise in pressure loss due to the disposition of the exhaust gas treatment apparatus in the exhaust system.

[1-2] Discharge electrode:

The discharge electrode is an electrode for generating corona discharge which charges the particulate matter in exhaust gas and disposed in the central portion in a cross section perpendicular to the flow direction of the flow passage inside the tubular body. Incidentally, in the exhaust gas treatment apparatus 1a shown in Figs. 1 to 4, as the opposed electrode of the discharged electrode 12, the tubular body 10 (more specifically, the inner wall face 10a of the tubular body 10) is used.

The discharge electrode is preferably constituted to be able to generate corona discharge in a region up to the inner wall face of the flow passage formed by the tubular body including the vicinity of the discharge electrode in such a manner that more particulate matter, preferably all the particular matter in the exhaust gas passing through the tubular body passes through the space where the corona discharge is generated.

In the exhaust gas treatment apparatus 1a shown in Figs. 1 to 4, the discharge electrode 12 is supported in the central portion of the flow passage by the porcelain bushing 16 passing through the wall face of the tubular body 10 and extended to the central portion in a cross section perpendicular to the flow direction of the flow passage by means of the dust collection electrode 14. Inside the porcelain bushing 16 is disposed a voltage introduction portion 18 including a wire for applying a voltage (high voltage) to the discharge electrode 12, and the voltage introduction portion 18 and the discharge electrode 12 are electrically connected with each other in a state that electrical insulation between the voltage introduction portion 18 and the tubular body 10 is secured.

There is no particular limitation on the shape of the discharge electrode as long as the discharge electrode has the tip portion formed at a sharp angle and corona discharge generated therein (more specifically, in the tip portion formed at a sharp angle) by application of the high voltage between the discharge electrode and the inner wall face of the tubular body. In the exhaust gas treatment apparatus 1a shown in Figs. 1 to 4, Figs. 5 and 6 show an example of the case where the discharge electrode 12 has a disk-like electrode support 12a disposed perpendicularly to the flow direction of the flow passage and a needle-like discharger 12b disposed perpendicularly to the electrode support 12a (i.e., in parallel with the flow direction). By such a constitution, an electric field concentrates in the tip portion of the needle-like discharger 12b to cause corona discharge in a good condition. In addition, by the needle-like discharger 12b, even if the tip portion is worn away in some degree, corona discharge can be caused by concentrating the electric field. Incidentally, "needle-like discharger" means a discharger having a thin stick shape as the entire shape besides a discharger having a sharp pointed tip portion. Incidentally, in a discharge electrode 12 having such a shape, the central portion of the electrode support 12a functions as a portion where a voltage from the voltage introduction portion 18 (see Fig. 1) is introduced. More specifically, in Fig. 3, the dust collection electrode 14 is connected with the central portion of the electrode support 12a, and the electrode support 12a is electrically connected with the voltage introduction portion 18 by means of the dust collection electrode 14.

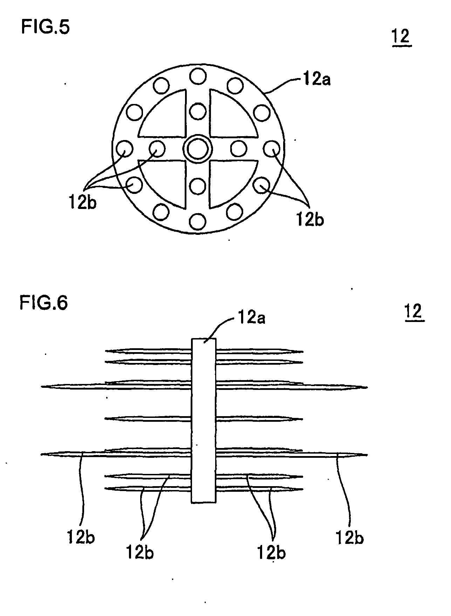

Here, Fig. 5 is a front view schematically showing an example of the discharge electrode used for an exhaust gas treatment apparatus of the present invention. Fig. 6 is a side view of the discharge electrode shown in Fig. 5.

Incidentally, in Figs. 5 and 6, 12 dischargers 12b are disposed at regular intervals on the outside on each of the faces of the electrode support 12a, and four dischargers 12b are further disposed inside the positions of the 12 dischargers 12b. In addition, the four discharger 12b disposed inside are longer than the 12 discharger 12b disposed outside. Such a constitution can cause corona discharge over a wider range inside the tubular body to be able to charge the particulate matter in exhaust gas in a good condition. In addition, assemblage and manufacturing of the members are easy, and, since most of the particulate matter in exhaust gas can be passed through in the vicinity of the discharge portion, much particulate matter can be charged in a good condition.

Incidentally, the shape of the discharge electrode is not limited to the aforementioned shape where needle-like dischargers are disposed on the electrode support, and, for example, a plurality of plate-like bodies each having at least one sharp blade edge-like side may be disposed on the electrode support. In the case of such a discharge electrode, the electric field concentrates on the blade edge of each plate-like body to cause corona discharge.

Regarding the material constituting the discharge electrode, there can suitably be used the same material as that constituting an electrode having conventionally been used for an exhaust gas treatment apparatus performing agglomeration by charging the particulate matter in exhaust gas. Examples of the material include stainless steel, iron, nickel, kovar, platinum, copper, gold, molybdenum, and tungsten.

In addition, the discharge electrode used for the exhaust gas treatment apparatus of the present embodiment preferably has a shape where more sharp portions are formed in a discharger portion so that the electric field may concentrate. In addition, it is preferable that dischargers are radially disposed from the center of the cross section of the tubular body and that it has a shape causing no decrease in pressure. In addition, as the discharger 12b shown in Figs. 5 and 6, it is preferably constituted so that many practical discharge positions are present.

[1-3] Dust collection electrode:

The dust collection electrode is an electrode for generating an electric field for trapping the particulate matter charged by corona discharge on the inner face of the tubular body and disposed over the length of twice or more than the inner diameter of the tubular body along the central axial direction of the flow passage on the downstream side of the discharge electrode in the flow passage. The opposed electrode disposed so as to face the dust collection electrode is constituted of the tubular body. By applying a voltage on the dust collection electrode, an electric field is generated from the dust collection electrode toward the inner wall face of the tubular body, and the charged particulate matter is trapped on the inner wall face of the tubular body.

Incidentally, in the exhaust gas treatment apparatus 1a of the present embodiment shown in Figs. 1 to 4, the discharge electrode 12 and the dust collection electrode 14 are disposed in the state that they are electrically connected with each other, and, by applying a voltage on one of the discharge electrode 12 and the dust collection electrode 14, the voltage is applied on each of the electrodes (i.e., the discharge electrodes 12 and the dust correction electrode 14). In Figs. 1 to 4, the voltage introduction portion 18 is electrically connected to the stick-like dust collection electrode 14, and the end portion on the upstream side of the stick-like dust collection electrode 14 is electrically connected to the disc-like electrode support 12a constituting the discharge electrode 12 (see Fig. 5).

Thus, in the case that the dust collection electrode 14 and the discharge electrode 12 are electrically connected with each other, since the voltage introduction portion 18 for applying a voltage (high voltage) is used in common, the constitution of the portion for introducing a voltage to each of the electrodes can be simplified. In addition, by supporting one of the dust collection electrode 14 and the discharge electrode 12, both the electrodes can be fixed in predetermined positions.

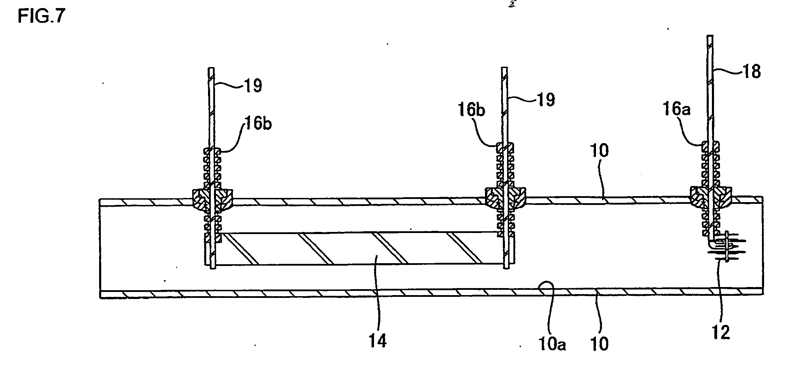

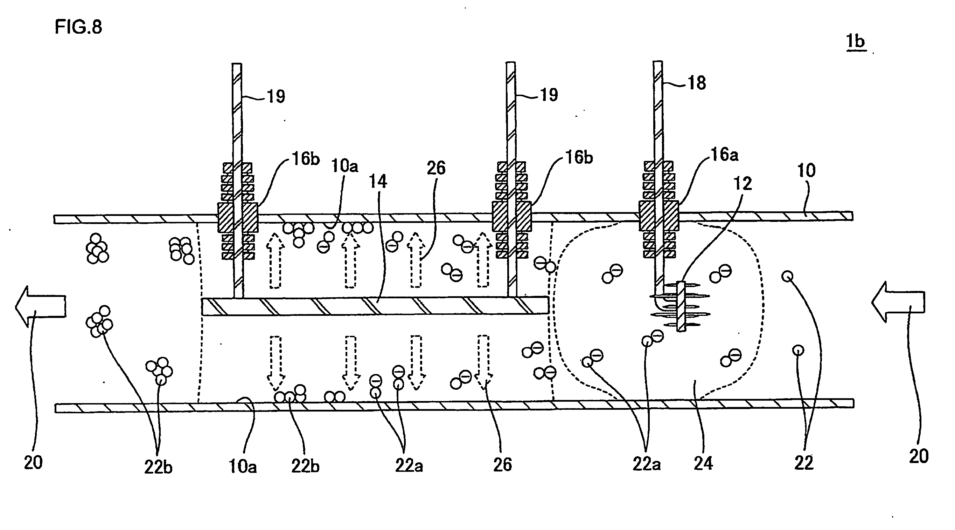

Incidentally, for example, as the exhaust gas treatment apparatus 1b shown in Figs. 7 and 8, the dust collection electrode 14 and the discharge electrode 12 may be disposed in the state that they are electrically insulated to independently apply a voltage on each of the electrodes (the dust collection electrode 14 and the discharge electrode 12).

Here, Fig. 7 is a cross-sectional view showing another embodiment of an exhaust gas treatment apparatus of the present invention, and Fig. 8 is an explanatory view schematically explaining the process of treating exhaust gas by another embodiment of an exhaust gas treatment apparatus of the present invention. Incidentally, Fig. 7 is a cross-sectional view showing a cross section similar to that of the exhaust gas treatment apparatus shown in Fig 3, and Fig. 8 is a cross-sectional view where a part of the cross-sectional view shown in Fig. 7 is enlarged. In addition, in Figs. 7 and 8, regarding the elements constituted in the same manner as those of the exhaust gas treatment apparatus 1a shown in Figs. 3 and 4, the same numerals are applied thereto to omit the explanations.

In Figs. 7 and 8, the discharge electrode 12 is supported in the central portion of the flow passage by the porcelain bushing 16a passing through the wall face of the tubular body 10 and extended up to the central portion in a cross section perpendicular to the flow direction of the flow passage and electrically connected with the voltage introduction portion 18 (voltage introduction portion for the discharge electrode). In addition, the dust collection electrode 14 also is supported in the central portion of the flow passage by the two porcelain bushings 16b each passing through the wall face of the tubular body 10 and extended up to the central portion in a cross section perpendicular to the flow direction of the flow passage and electrically connected with the voltage introduction portion 19 (voltage introduction portion for the dust collection electrode).

In the exhaust gas treatment apparatus 1b constituted in such a manner, since a voltage can be applied independently on each of the discharge electrode 12 and the dust collection electrode 14, it is possible that, for example, a voltage capable of causing corona discharge 24 suitable for charging the particulate matter 22 is applied on the discharge electrode 12, while a voltage capable of generating an electric field 26 suitable for trapping the charged particulate matter 22a on the inner wall face 10a of the tubular body 10 is applied on the dust collection electrode 14 independently.

The dust collection electrode preferably has a stick-like shape where a diameter in a cross section perpendicular to the flow direction of the flow passage is 0.1 to 0.5 times the inner diameter of the tubular body. Such a constitution enables to increase the strength of the electric field generated inside the tubular body 10. For example, when the diameter of the dust collection electrode is below 0.1 times the inner diameter of tubular body, the dust collection electrode is too thin, and it is sometimes impossible to draw the charged particulate matter sufficiently to the inner wall face of the tubular body. On the other hand, when the diameter of the dust collection electrode is above 0.5 times the inner diameter of the tubular body, the size of the dust collection electrode occupying the flow passage is too large, and the pressure loss may be increased. Incidentally, the diameter of the dust collection electrode is further preferably 0.3 to 0.5 times the inner diameter of the tubular body.

The material constituting the dust collection electrode is a conductive material, for example, stainless steel, iron, nickel, kovar, platinum, copper, gold, molybdenum, and tungsten.

In addition, the dust collection electrode used for the exhaust gas treatment apparatus of the present embodiment preferably has a shape where a high electric field can be generated in the tubular body without causing local corona discharge or the like even when a high voltage is applied thereon by reducing protruding portions of the surface as much as possible by, for example, chamfering the uneven portions of the surface. In addition, for lightening the electrode members, it may have the hollow in the inside thereof.

[1-4] Porcelain bushing:

As described above, in the exhaust gas treatment apparatus of the present embodiment, it is preferable that at least one of the discharge electrode and the dust collection electrode is supported in the central portion of the flow passage by a porcelain bushing passing through the wall face of the tubular body, being extended up to the central portion in a cross section perpendicular to the flow direction of the flow passage, and having electrical insulation. Such a constitution can cause corona discharge in a good condition by the discharge electrode and can generate an electric field for trapping the particulate matter in a good condition by the dust collection electrode.

Examples of the material for the porcelain bushing include alumina, cordierite, mullite, and glass, and alumina or the like excellent in insulation, thermal resistance, thermal shock resistance, corrosion resistance, mechanical strength, and the like, can be used more suitably.

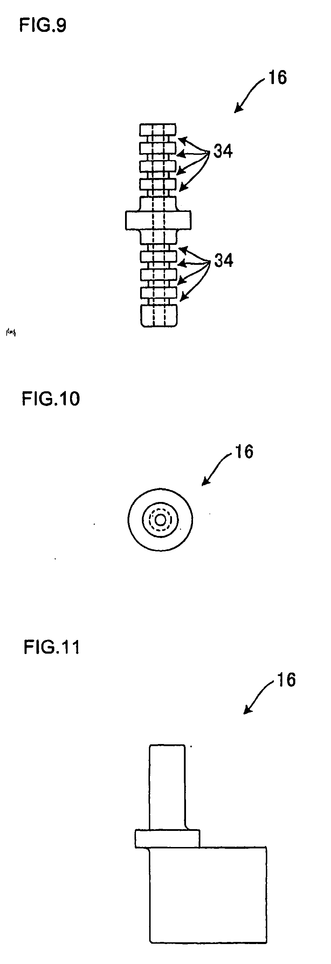

Such a porcelain bushing preferably has a constitution where a creeping discharge is not caused on the surface of the porcelain bushing upon applying a voltage on each of the electrodes. For example, as shown in Figs. 9 and 10, as a porcelain bushing 16 used for the exhaust gas treatment apparatus of the present embodiment, one having a groove-like unevenness 34 formed on the surface thereof can suitably be used. Here, Fig. 9 is a side view schematically showing an example of a porcelain bushing used for an exhaust gas treatment apparatus of the present invention, and Fig. 10 is a top view of the porcelain bushing shown in Fig. 9.

In addition, when particulate matter such as soot adheres to the porcelain bushing, insulation breakdown may be caused between the tubular body and the discharge electrode or the dust collection electrode by the particulate matter adhering to the porcelain bushing to hinder the generation of the electric field for corona discharge or the dust collection. Therefore, for example, it may have a constitution having a heater disposed inside the porcelain bushing so that particulate matter adheres to the surface of the porcelain bushing can be combusted and removed by heating the heater.

In addition, it may have a constitution where a catalyst is applied on the surface of the porcelain bushing exposed inside the tubular body to be able to combust and remove adhering particulate matter by the heat of exhaust gas from an engine or the like when particulate matter adheres to the surface of the porcelain bushing. For example, as such a catalyst, an oxidation catalyst used for purification of exhaust gas discharged from an internal combustion engine or the like can suitably be used. Suitable examples of the oxidation catalyst include a conventionally known oxidation catalyst containing platinum (Pt), rhodium (Rh), palladium (Pd), or the like.

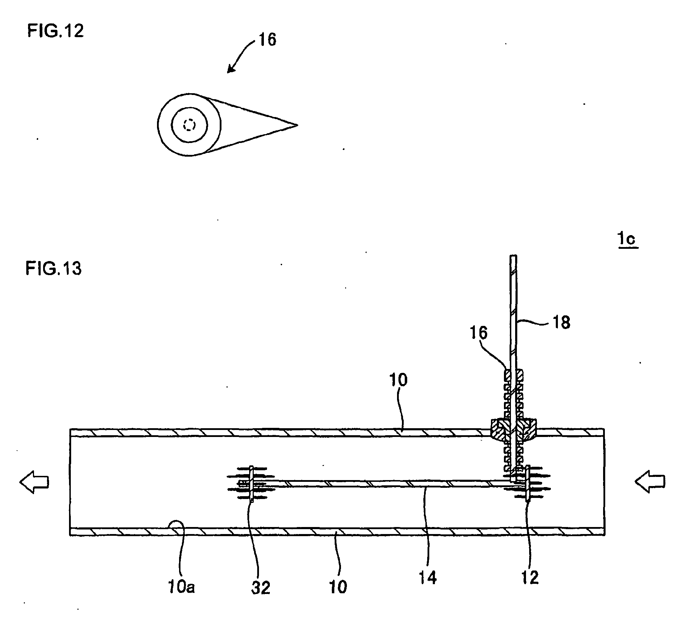

In addition, as shown in Figs. 11 and 12, it may have a shape where the side portion exposed inside the tubular body of the porcelain bushing 16 protrudes toward the upstream side of the flow passage. A porcelain bushing 16 thus constituted hardly hinders the flow of exhaust gas to reduce resistance of exhaust gas against the porcelain bushing 16, and the particulate matter hardly adheres to the surface of the porcelain bushing 16. Here, Fig. 11 is a side view schematically showing another example of a porcelain bushing used for an exhaust gas treatment apparatus of the present invention, and Fig. 12 is a top view of the porcelain bushing shown in Fig. 11.

[1-5] Second discharge electrode:

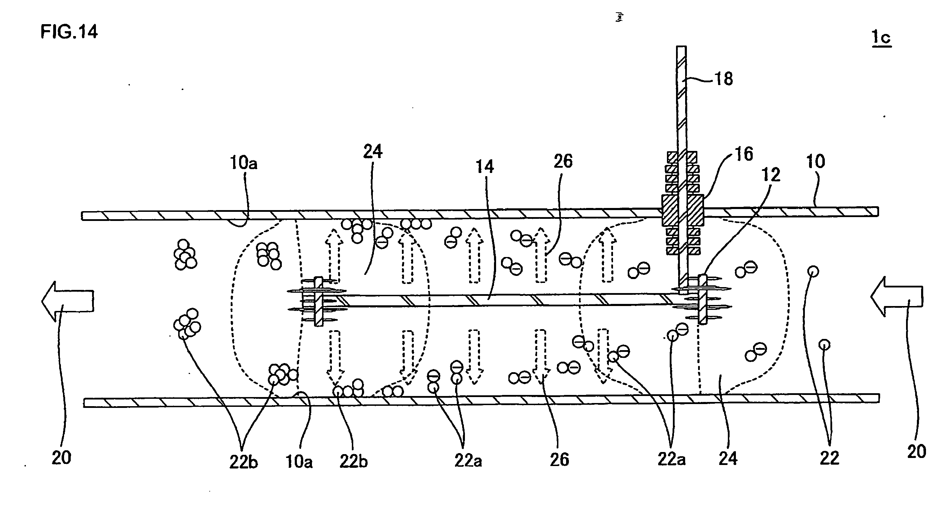

In addition, as shown in Figs. 13 and 14, an exhaust gas treatment apparatus may further be provided with the second discharge electrode 32 disposed in the central portion in a cross section perpendicular to the flow direction of the flow passage on the downstream side of the tip portion on the flow passage upstream side of the dust collection electrode 14 and causing corona discharge in the periphery thereof by applying a voltage.

Here, Fig. 13 is a cross-sectional view showing still another embodiment of an exhaust gas treatment apparatus of the present invention, and Fig. 14 is an explanatory view schematically explaining the process of treating exhaust gas by another embodiment of an exhaust gas treatment apparatus of the present invention. Incidentally, Fig. 13 is a cross-sectional view showing the same cross section as that of the exhaust gas treatment apparatus shown in Fig. 3, and Fig. 14 is a cross-sectional view where a part of the cross-sectional view shown in Fig. 13 is enlarged. In addition, in Figs. 13 and 14, regarding the elements constituted in the same manner as those of the exhaust gas treatment apparatus 1a shown in Figs. 3 and 4, the same numerals are applied thereto to omit the explanations.

Thus, by providing the second discharge electrode 32 on the downstream side of the tip on the flow passage upstream side of the dust collection electrode 14, particles which could not be charged by the first discharge electrode can be charged sufficiently to improve the particle trapping performance.

In Figs. 13 and 14, the second discharge electrode 32 is disposed in the end portion on the flow passage downstream side of the dust collection electrode 14, and a voltage is applied on the second discharge electrode 32 by means of the dust collection electrode 14. Incidentally, the second discharge electrode 32 used for the exhaust gas treatment apparatus 1c is constituted in the same manner as the discharge electrode 12 disposed in the end portion on the upstream side of the dust collection electrode 14. That is, for example, as the discharge element 12 shown in Figs. 5 and 6, the second discharge electrode 32 is constituted by a disc-like electrode support disposed perpendicularly to the flow direction of the flow passage and a plurality of needle-like discharger disposed perpendicularly to the electrode support (i.e., in parallel with the flow direction).

In addition, in the case that the second discharge electrode is disposed inside the tubular body, it may be constituted so that the second discharge electrode is disposed on the flow passage downstream side of the dust collection electrode in the state that the second discharge electrode and the dust collection electrode are electrically insulated from each other to be able to apply a voltage to the second discharge electrode independently though the illustration is omitted.

[1-6] Voltage introduction portion:

The voltage introduction portion is a member including a wire or the like for applying a voltage to the discharge electrode and the dust collection electrode and connected to a power source (not illustrated) for causing corona discharge and generating an electric field for trapping the charged particulate matter. Incidentally, in the exhaust gas treatment apparatus 1a of the present embodiment shown in Figs. 1 to 4, it passes through the porcelain bushing 16 passing through the wall face of the tubular body 10 from the outside of the tubular body 10 and extended up to the central portion in a cross section perpendicular to the flow direction of the flow passage to be electrically connected to the electrode (dust collection electrode 14 in Fig. 3) disposed inside the tubular body 10.

[1-7] Power source:

The powder source is for applying a voltage to the discharge electrode or the dust collection electrode, and, for example, a direct current power source (DC power source), a pulse power source, or the like may suitably be used. In particular, in the exhaust gas treatment apparatus of the present embodiment, a direct current power source (DC power source) is preferable. Incidentally, the same power source may be used for the discharge electrode and the dust collection electrode, and different power sources may be used in the case that the discharge electrode and the dust collection electrode are disposed in an electrically insulated state. Incidentally, in the case of using different power sources, the power sources may be constituted in the same manner. However, it is preferable that the power source connected to the dust collection electrode can apply a higher voltage.

Specific values of the voltage applied on the discharge electrode and the dust collection electrode and the electric power can suitably be determined so that suitable discharge and electric field can be generated depending on the size of the tubular body functioning as the flow passage; the flow amount and flow rate of the exhaust gas passing through the flow passage; the amount, size, number of the particulates contained in the exhaust gas; and the like.

For example, though it is not particularly limited, in the case that the discharge electrode and the dust collection electrode are electrically connected with each other and that the exhaust gas treatment apparatus of the present embodiment is used for treating exhaust gas discharged from a gasoline engine, the voltage is preferably 6 to 10 kV, more preferably 8 to 9kV. In addition, the electric power is preferably 2 to 30W, more preferably 4 to 15W. Such a constitution enables to perform the treatment of exhaust gas discharged from a gasoline engine in a good condition.

In addition, in the case that a power source is independently connected to each of the discharge electrode and the dust collection electrode, the voltage for the discharge electrode is preferably 6 to 10 kV, more preferably 8 to 9 kV, and the voltage for the dust collection electrode is preferably 10 to 18 kV, more preferably 13 to 15 kV. In addition, the power source of the discharge electrode is preferably 2 to 8W, more preferably 4 to 6W, and the power source of the dust collection electrode is preferably 10 to 40W, more preferably 16 to 30W.

Example

Hereinbelow, the present invention will be described more specifically by Examples. However, the present invention is by no means limited to these Examples.

(Example 1)

There was manufactured an exhaust gas treatment apparatus 1a as shown in Figs. 1 to 3. The tubular body 10 had a circular cylindrical shape having a length of 300mm in the exhaust gas flow direction, an outer diameter of 60.5 mm, and an inner diameter of 53.5 mm, and the material of the tubular body was stainless steel.

An alumina porcelain bushing 16 was disposed in the position of 30 mm from the end face on the upstream side of the flow direction of the tubular body 10 so that it passed through the tubular body 10, and a voltage introduction portion 18 was disposed inside the porcelain bushing 16. A stick-shaped dust collection electrode 14 where discharge electrode 12 was disposed in the end portion of the upstream side was connected to the voltage introduction portion 18 to fix the discharge electrode 12 and the dust collection electrode 14 inside the tubular body 10.

As shown in Figs. 5 and 6, the discharge electrode 12 was constituted by the disc-like electrode support 12 and the 16 dischargers 12b (12 dischargers at an angle of 30° outside, and 4 dischargers at an angle of 90° inside) disposed on the disc-like electric support 12a.

The disc-like electrode support had a shape where 1/4 circles having a radius of 7 mm was gouged out of the ring-shaped support having the outer periphery of 20 mm so that a cross-shaped support having a width of 3 mm remains in the central portion. In addition, through-holes each having a diameter of 1.5 mm were formed in portions where the dischargers were to be disposed, and the dischargers were disposed in the through-holes. Incidentally, the electrode support was formed of stainless steel.

Each of the dischargers had a diameter of 1.5 mm with a sharp needle-like tip end and was formed of stainless steel. Each of the 12 dischargers disposed on the outside had a length of protruding by 10 mm from the surface of the electrode support, and each of the 4 dischargers disposed on the inside had a length of protruding by 20 mm from the surface of the electrode support.

The dust collection electrode was a stick-like electrode having a length of 150 mm and a diameter of 20 mm of a cross section perpendicular to the longitudinal direction. The length of the dust collection electrode was 2.8 times the inner diameter of the tubular body.

The thus constituted exhaust gas treatment apparatus of Example 1 was attached to a soot generator generating particulate matter by a burner with light oil being used as the fuel, and test exhaust gas (hereinbelow referred to as "exhaust gas" simply) at about 195°C was introduced at a flow rate of 1.5 m$^3$/min. In such a state, as shown in Table 1, a direct current voltage of 8 kV with an electric power of 16W was applied on the discharge electrode and the dust collection electrode of the exhaust gas treatment apparatus of Example 1 to treat the exhaust gas. The mass (g/hour) of the particulate matter on the inlet side of the exhaust gas treatment apparatus during treating the exhaust gas, the number ($\times$ 10$^7$ particulates/sec.), the mass (g/hour), and the average particle diameter ($\mu$m) of the particulates on the outlet side were measured. The measurement results are shown in Table 2.

(Measurement of the number of particulates)

A particle counter (Electrical Low Pressure Impactor (ELPI) produced by Dekati Ltd.) was equipped on the downstream side of the discharge electrode and the dust collection electrode to measure the number of the discharged particulates by each particle diameter range on the downstream side of each electrode in the case that a voltage was applied on each electrode (upon applying a voltage) and in the case that no voltage was applied (upon applying no voltage). Then, from the sum of the measurement data for each particle diameter range, the total number (total discharge number) of the particulate matter discharged from the downstream side was calculated out. Incidentally, in the measurement, particles having the diameter of 0.007 to 10 $\mu$m were measured and classified into the particulate diameter regions of 0.007 to 0.014, 0.014 to 0.0396, 0.0396 to 0.0718, 0.0718 to 0.119, 0.119 to 0.200, 0.200 to 0.315, 0.315 to 0.482, 0.0482 to 0.760, 0.760 to 1.23, 1.23 to 1.95, 1.95 to 3.08, 3.08 to 6.27 (unit of $\mu$m). Incidentally, for example, in the case of the particle diameter of "0.07 to 0.014", particles having a particle diameter of 0.007 $\mu$m or more and below 0.014 $\mu$m are included.

(Measurement of ratio of reduced particulate matter)

From the data of the total discharge number ($\times$ 10$^7$ particulates/sec.) upon each of the application of a voltage and the application of no voltage obtained by the aforementioned measurement of the number of particulates, the ratio of the reduced number of the discharged particle by the use of the exhaust gas treatment apparatus was calculated by the following formula (1).

```
(Total number upon applying no voltage - total

number upon applying a voltage) / total number upon

applying no voltage × 100 ... (1)
```

(Measurement of mass of particulate matter)

A bypass line from the exhaust gas flow passage was provided on each of the upstream side and the downstream side of the position where the exhaust gas treatment apparatus was disposed, and a paper filter for sampling the particulate matter in the exhaust gas passing through the bypass lines was disposed in each of the bypass lines. The sampling time of the particulate matter by the paper filter was three minutes, and the change in the paper filter mass by the sampling was calculated from the paper filter mass before sampling weighed in advance. By the mass change in the mass of each of the paper filters disposed on the upstream side and the downstream side, the mass (g/hour) of the particulate matter on each of the inlet side and the outlet side of the exhaust gas treatment apparatus was calculated.

(Average particle diameter of particulate matter)

From the measurement data by particle diameter obtained by the aforementioned measurement of the number of particulates, the average particle diameter of the particulates contained in exhaust gas was calculated by the following formula (2).

$$\text{Average particle diameter} = [\Sigma\{(\text{average particle diameter in each sampling range}) \times (\text{number of particulates sampled in each sampling range})]/\text{total discharge number} \ldots (2)$$

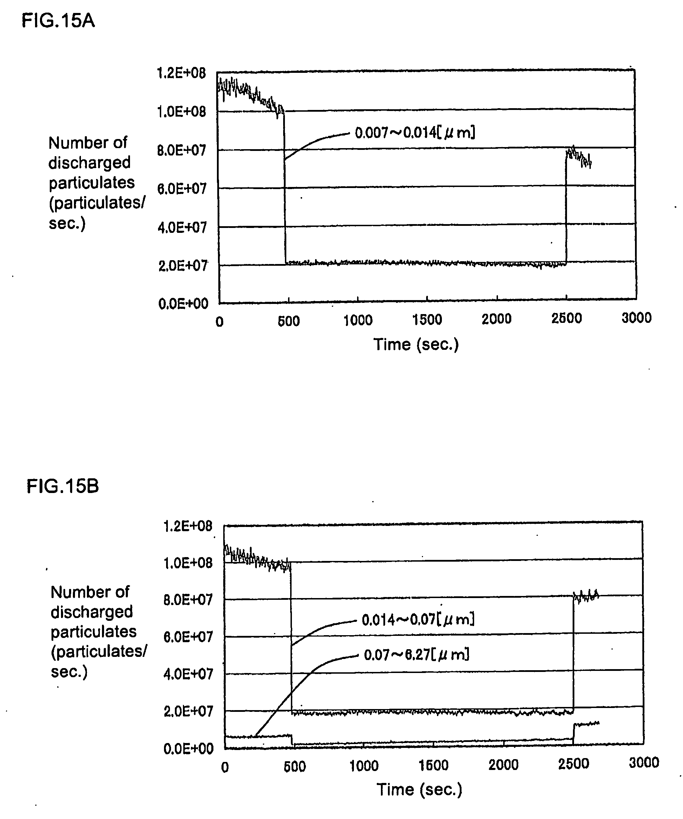

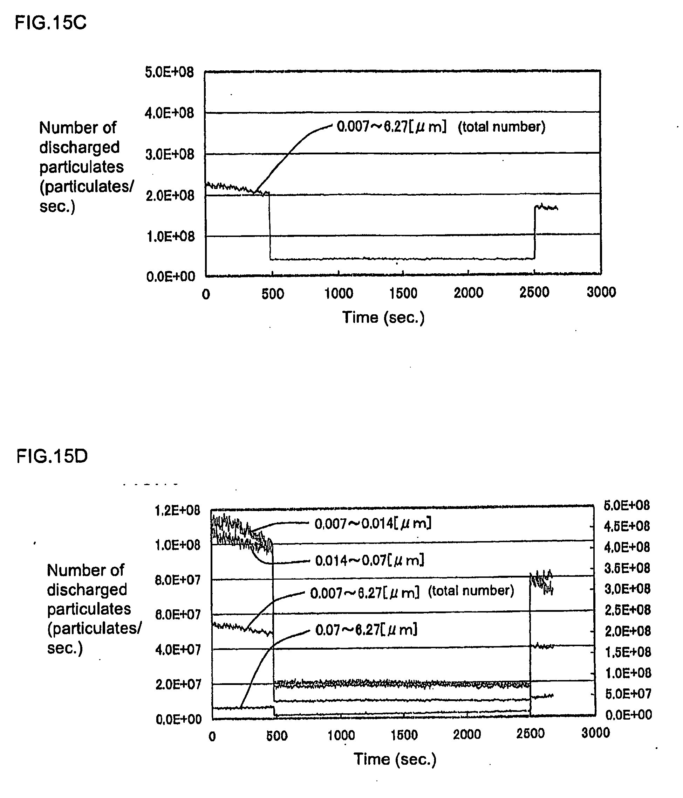

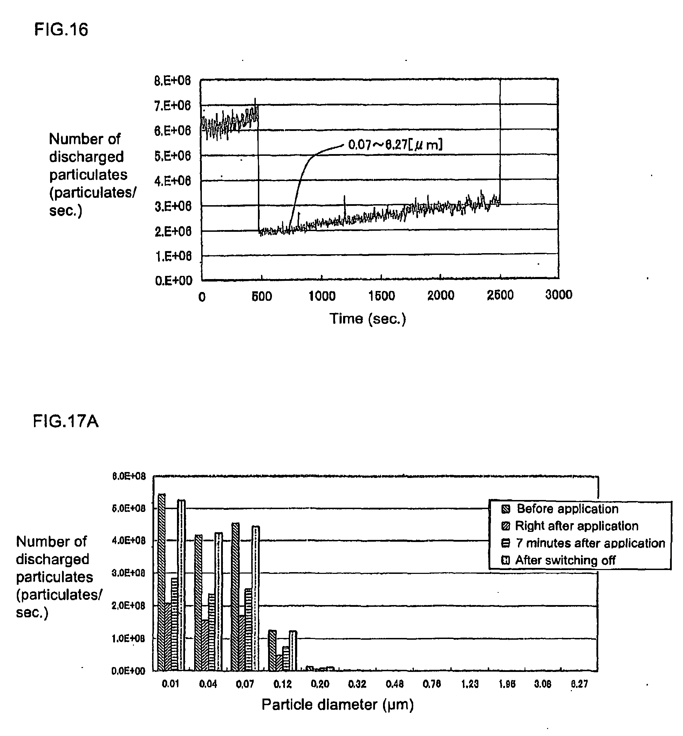

Here, Figs. 15A to 15D are graphs each showing the change in the number of particulates (discharge number) on the outlet side of the exhaust gas treatment apparatus of Example 1. Fig. 15A shows the measurement results of the particulates each having a particle diameter of 0.007 to 0.014 4 $\mu$m, Fig. 15B shows the measurement results of the particulates each having a particle diameter of 0.014 to 0.07 $\mu$m and the particles each having a particle diameter of 0.07 to 6.27 $\mu$m, and Fig. 15C shows a measurement result of all particulates (total number). In addition, Fig. 5D is a graph where the measurement results of the Figs. 15A to 15C are shown together. In Figs. 15A to 15D, the axis of abscissa shows time (second), and the axis of ordinate shows the number (particles/sec.) of the particulates. Incidentally, the treatment of exhaust gas (application of a voltage) is disclosed from 480 sec. from the start of the measurement, and the application of the voltage was once stopped at 2500 sec. In addition, Fig. 16 is a graph where the portion showing the number of particulates of 0.07 to 6.27 $\mu$m of Fig. 15B is enlarged.

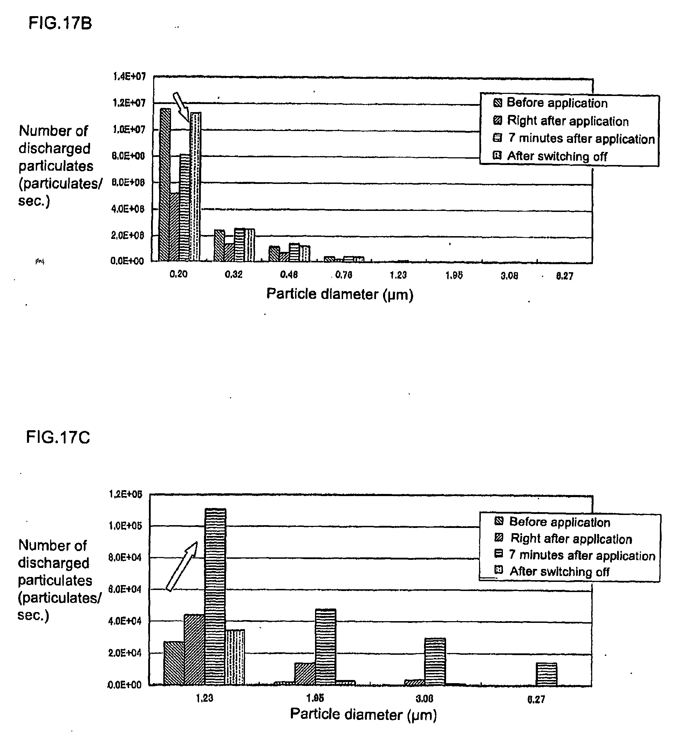

In addition, Fig. 17A is a graph showing the measurement results for 10 seconds of each particle diameter in the measurement of the number of the particulates, where the axis of abscissa shows the particle diameter ($\mu$m), while the axis of ordinate shows the number of particulates. In addition, Fig. 17B is a graph showing enlarged results of the measurement of the number of the particulates having a particle diameter of 0.20 to 6.27 $\mu$m in Fig. 17A. Fig. 17B is a graph showing enlarged results of the measurement of the number of the particulates having a particle diameter of 1.23 to 6.27 $\mu$m.

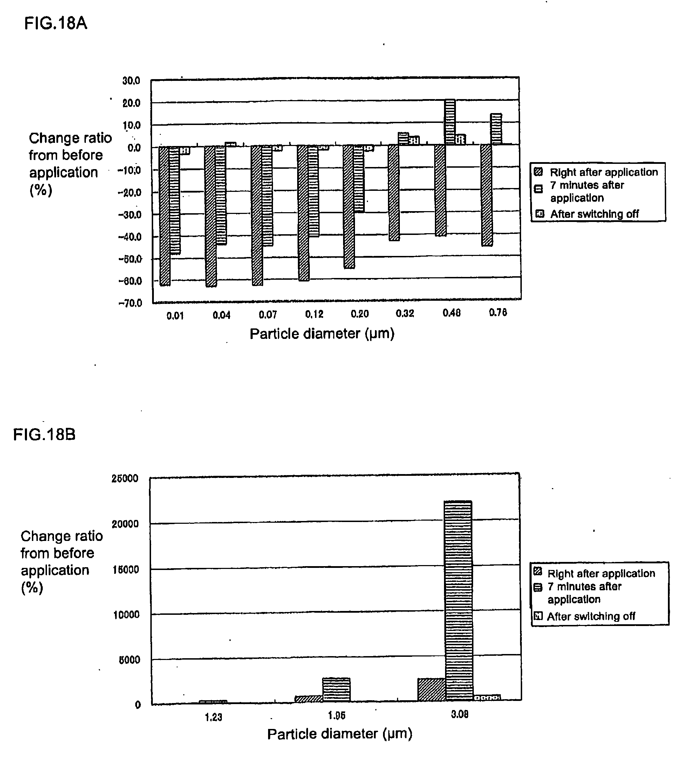

Incidentally, in the aforementioned measurement of the number of particulates, in the four states of before the voltage was applied, right after the application of voltage was started (specifically, after 5 seconds), after 7 minutes from the start of the application of the voltage, and after the application of the voltage was stopped, the number of the particulate for 10 seconds of each particle diameter was obtained, and the ratio of the number of the particulates in each of the states was calculated out as the change ratio of the number of the particulates. Here, Fig. 18A is a graph showing the change ratio (%) of the number of the particulates having a particle diameter of 0.01 to 0.70 $\mu$m, and 18B is a graph showing the change ratio (%) of the number of the particulates having a particle diameter of 1.23 to 3.06 $\mu$m. Incidentally, in Figs. 18A and 18B, the axis of abscissa shows each particle diameter ($\mu$m), and the axis of ordinate shows the change ratio (%) of the number of particulates.

Table 1

| | Inner diameter of tubular body (mm) | Length of dust collection electrode (mm) | Diameter of dust collection electrode (mm) | Rate of length of dust collection electrode to diameter of tubular body | Distance between discharge electrode and dust collection electrode (mm) | Discharge electrode | | Dust collection electrode | |
|---|---|---|---|---|---|---|---|---|---|
| | | | | | | Voltage (kV) | Electric Power (W) | Voltage (kV) | Electric Power (W) |
| Example 1 | 53.5 | 150 | 20 | 2.8 | 0 | 8 | 16 | Same as left | |
| Example 2 | 53.5 | 112 | 20 | 2.1 | 0 | 8 | 16 | Same as left | |
| Example 3 | 53.5 | 267.5 | 20 | 5 | 0 | 8 | 16 | Same as left | |
| Example 4 | 53.5 | 321 | 20 | 6 | 0 | 8 | 16 | Same as left | |
| Example 5 | 53.5 | 535 | 20 | 10 | 0 | 8 | 16 | Same as left | |
| Example 6 | 53.5 | 150 | 20 | 2.8 | 50 | 8 | 5 | 8 | 11 |
| Example 7 | 53.5 | 112 | 20 | 2.1 | 50 | 8 | 5 | 8 | 11 |
| Example 8 | 53.5 | 267.5 | 20 | 5 | 50 | 8 | 5 | 8 | 11 |
| Example 9 | 53.5 | 321 | 20 | 6 | 50 | 8 | 5 | 8 | 11 |
| Example 10 | 53.5 | 535 | 20 | 10 | 50 | 8 | 5 | 8 | 11 |
| Comp. Ex. 1 | 53.5 | None | None | - | - | 8 | 5 | - | - |
| Comp. Ex. 2 | 53.5 | 96.3 | 20 | 1.8 | 0 | 8 | 16 | Same as left | |
| Comp. Ex. 3 | 53.5 | 26.8 | 20 | 0.5 | 0 | 8 | 16 | Same as left | |
| Comp. Ex. 4 | 53.5 | 96.3 | 20 | 1.8 | 50 | 8 | 5 | 8 | 11 |
| Comp. Ex. 5 | 53.5 | 26.8 | 20 | 0.5 | 50 | 8 | 5 | 8 | 11 |

Table 2

| | Condition of exhaust gas | | Particulate matter on inlet side | Particulate matter on outlet side | | | Ratio of reduced number of particulate (%) |
|---|---|---|---|---|---|---|---|
| | Flow rate (m/sec.) | Temperature (°C) | Mass (g/hour) | Mass (g/hour) | Number (x $10^7$ /sec.) | Average particle diameter ($\mu$m) | |
| Example 1 | 12 | 195 | 1.07 | 0.37 | 5.1 | 0.038 | 74 |
| Example 2 | 12 | 195 | 1.08 | 0.38 | 5.3 | 0.038 | 73 |
| Example 3 | 12 | 194 | 1.06 | 0.36 | 4.8 | 0.038 | 77 |
| Example 4 | 12 | 198 | 1.05 | 0.36 | 4.6 | 0.038 | 78 |
| Example 5 | 12 | 196 | 1.04 | 0.35 | 4.2 | 0.038 | 79 |
| Example 6 | 12 | 195 | 1.08 | 0.36 | 4.8 | 0.039 | 77 |
| Example 7 | 12 | 195 | 1.09 | 0.37 | 5.3 | 0.038 | 75 |
| Example 8 | 12 | 195 | 1.05 | 0.31 | 2.4 | 0.039 | 90 |
| Example 9 | 12 | 195 | 1.07 | 0.3 | 2.3 | 0.038 | 91 |
| Example 10 | 12 | 194 | 1.06 | 0.3 | 2.3 | 0.038 | 91 |
| Comp. Ex. 1 | 12 | 196 | 1.08 | 0.39 | 6.03 | 0.038 | 60 |
| Comp. Ex. 2 | 12 | 194 | 1.08 | 0.37 | 5.5 | 0.038 | 71 |
| Comp. Ex. 3 | 12 | 196 | 1.06 | 0.37 | 5.6 | 0.037 | 65 |
| Comp. Ex. 4 | 12 | 198 | 1.06 | 0.37 | 5.22 | 0.038 | 65 |
| Comp. Ex. 5 | 12 | 196 | 1.08 | 0.38 | 5.35 | 0.038 | 64 |

(Examples 2 to 5)

Each of the exhaust gas treatment apparatuses constituted as in Example 1 was manufactured except that the length of the dust collection electrode was changed as shown in Table 1 to treat exhaust gas in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 2.

(Example 6)

As shown in Fig. 7, there was manufactured an exhaust gas treatment apparatus constituted as in Example 1 except that the discharge electrode 12 and the dust collection electrode 14 were disposed with a space of 50 mm and that the voltage introduction portions 18 and 19 were electrically connected with the discharge electrode 12 and the dust collection electrode 14, respectively, to treat exhaust gas in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 2.

(Examples 7 to 10)

There was manufactured each of the exhaust gas treatment apparatuses constituted as in Example 6 except that the length of the dust collection electrode was changed as shown in Table 1, and exhaust gas was treated in the same manner as in Example 1. The measurement results of the mass (g/hour) of particulate matter on the inlet side of the exhaust gas treatment apparatus during the exhaust gas treatment and the number ($\mu 10^7$ particulates/sec.), mass (g/hour), and average particle diameter ($\mu$m) of particulates on the outlet side during the exhaust gas treatment are shown in Table 2.

(Comparative Example 1)

A discharge electrode constituted in the same manner as the tubular body used in Example 1 was disposed inside the tubular body which was the same as that used in Example 1 to manufacture an exhaust gas treatment apparatus. That is, in an exhaust gas treatment apparatus of Comparative Example 1, a stick-like dust collection electrode was not disposed. Incidentally, a voltage introduction portion was electrically connected with the discharge electrode. By the use of such an exhaust gas treatment apparatus, exhaust gas was treated in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 2.

(Comparative Examples 2 and 3)

There was manufactured each of the exhaust gas treatment apparatuses constituted as in Example 1 except that the length of the dust collection electrode was changed as shown in Table 1, and exhaust gas was treated in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 2.

(Comparative Examples 4 and 5)

There was manufactured each of the exhaust gas treatment apparatuses constituted as in Example 6 except that the length of the dust collection electrode was changed as shown in Table 1, and exhaust gas was treated in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 2.

Table 3

| | Inner diameter of tubular body (mm) | Length of dust collection electrode (mm) | Diameter of dust collection electrode (mm) | Rate of length of dust collection electrode to diameter of tubular body | Distance between discharge electrode and dust collection electrode (mm) | Discharge electrode | | Dust collection electrode | |
|---|---|---|---|---|---|---|---|---|---|
| | | | | | | Voltage (kV) | Electric Power (W) | Voltage (kV) | Electric Power (W) |
| Example 11 | 53.5 | 150 | 20 | 2.8 | 20 | 8 | 5 | 8 | 11 |
| Example 12 | 53.5 | 150 | 20 | 2.8 | 80 | 8 | 5 | 8 | 11 |
| Example 13 | 53.5 | 150 | 5 | 2.8 | 0 | 8 | 16 | Same as left | |
| Example 14 | 53.5 | 150 | 10 | 2.8 | 0 | 8 | 16 | Same as left | |
| Example 15 | 53.5 | 150 | 5 | 2.8 | 50 | 8 | 5 | 8 | 11 |
| Example 16 | 53.5 | 150 | 10 | 2.8 | 50 | 8 | 5 | 8 | 11 |
| Example 17 | 53.5 | 150 | 20 | 2.8 | 0 | 9 | 18 | Same as left | |
| Example 18 | 53.5 | 150 | 20 | 2.8 | 0 | 7 | 14 | Same as left | |
| Example 19 | 53.5 | 150 | 20 | 2.8 | 0 | 14 | 27 | Same as left | |
| Example 20 | 53.5 | 150 | 20 | 2.8 | 0 | 15 | 29 | Same as left | |
| Example 21 | 53.5 | 150 | 20 | 2.8 | 0 | 13 | 25 | Same as left | |
| Example 22 | 53.5 | 150 | 20 | 2.8 | 50 | 9 | 5.5 | 9 | 13 |
| Example 23 | 53.5 | 150 | 20 | 2.8 | 50 | 7 | 4.8 | 7 | 10 |
| Example 24 | 53.5 | 150 | 20 | 2.8 | 50 | 8 | 5 | 14 | 20 |
| Example 25 | 53.5 | 150 | 20 | 2.8 | 50 | 9 | 5.5 | 15 | 22 |
| Example 26 | 53.5 | 150 | 20 | 2.8 | 50 | 7 | 4.8 | 13 | 19 |
| Example 27 | 53.5 | 150 | 20 | 2.8 | 0 | 8 | 16 | Same as left | |
| Example 28 | 53.5 | 150 | 20 | 2.8 | 0 | 8 | 16 | Same as left | |
| Example 29 | 53.5 | 150 | 20 | 2.8 | 0 | 8 | 16 | Same as left | |
| Example 30 | 53.5 | 150 | 20 | 2.8 | 0 | 8 | 16 | Same as left | |

Table 4

| | Condition of exhaust gas | | Particulate matter on inlet side | Particulate matter on outlet side | | | Ratio of reduced number of particulate (%) |
|---|---|---|---|---|---|---|---|
| | Flow rate (m/sec.) | Temperature (°C) | Mass (g/hour) | Mass (g/hour) | Number (x$10^7$/sec.) | Average particle diameter ($\mu$m) | |
| Example 11 | 12 | 195 | 1.07 | 0.36 | 4.7 | 0.039 | 78 |
| Example 12 | 12 | 196 | 1.06 | 0.39 | 5 | 0.038 | 73 |
| Example 13 | 12 | 195 | 1.05 | 0.41 | 7 | 0.038 | 64 |
| Example 14 | 12 | 197 | 1.05 | 0.4 | 6.1 | 0.038 | 68 |
| Example 15 | 12 | 196 | 1.06 | 0.4 | 6.8 | 0.038 | 66 |
| Example 16 | 12 | 193 | 1.07 | 0.4 | 5.8 | 0.038 | 71 |
| Example 17 | 12 | 195 | 1.05 | 0.37 | 5 | 0.038 | 74 |
| Example 18 | 12 | 195 | 1.06 | 0.38 | 5.1 | 0.038 | 74 |
| Example 19 | 12 | 195 | 1.06 | 0.35 | 5 | 0.04 | 76 |
| Example 20 | 12 | 196 | 1.08 | 0.35 | 4.9 | 0.04 | 77 |
| Example 21 | 12 | 196 | 1.05 | 0.35 | 5 | 0.04 | 76 |
| Example 22 | 12 | 194 | 1.05 | 0.36 | 4.7 | 0.039 | 78 |
| Example 23 | 12 | 194 | 1.05 | 0.39 | 5 | 0.039 | 76 |
| Example 24 | 12 | 195 | 1.09 | 0.35 | 4.2 | 0.04 | 79 |
| Example 25 | 12 | 194 | 1.08 | 0.34 | 4 | 0.04 | 82 |
| Example 26 | 12 | 196 | 1.09 | 0.39 | 4.5 | 0.039 | 77 |
| Example 27 | 50 | 195 | 1.07 | 0.37 | 5.1 | 0.038 | 72 |
| Example 28 | 100 | 195 | 1.07 | 0.37 | 5.1 | 0.038 | 70 |
| Example 29 | 150 | 195 | 1.07 | 0.37 | 5.1 | 0.038 | 66 |
| Example 30 | 200 | 195 | 1.07 | 0.37 | 5.1 | 0.038 | 60 |

(Example 11 and 12)

There was manufactured each of the exhaust gas treatment apparatuses constituted as in Example 6 except that the space between the discharge electrode and the dust collection electrode was changed as shown in Table 3, and exhaust gas was treated in the same manner as in Example 1. The measurement results of the mass (g/hour) of particulate matter on the inlet side of the exhaust gas treatment apparatus during the exhaust gas treatment and the number ($\times10^7$ particulates/sec.), mass (g/hour), and average particle diameter ($\mu$m) of particulates on the outlet side during the exhaust gas treatment are shown in Table 4.

(Example 13 and 14)

There was manufactured each of the exhaust gas treatment apparatuses constituted as in Example 1 except that the diameter of the dust collection electrode was changed as shown in Table 3, and exhaust gas was treated in the same manner as in Example 1. The measurement results of the mass (g/hour) of particulate matter on the inlet side of the exhaust gas treatment apparatus during the exhaust gas treatment and the number ($\times10^7$ particulates/sec.), mass (g/hour), and average particle diameter ($\mu$m) of particulates on the outlet side during the exhaust gas treatment are shown in Table 4.

(Example 15 and 16)

There was manufactured each of the exhaust gas treatment apparatuses constituted as in Example 6 except that the diameter of the dust collection electrode was changed as shown in Table 3, and exhaust gas was treated in the same manner as in Example 1. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 4.

(Example 17 to 21)

There was manufactured each of the exhaust gas treatment apparatus constituted as in Example 1, and exhaust gas was treated in the same manner as in Example 1 except that the voltage (kV) applied to the discharge electrode and the dust collection electrode and the electric power (W) were changed as shown in Table 3. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 4.

(Example 22 to 26)

There was manufactured each of the exhaust gas treatment apparatus constituted as in Example 6, and exhaust gas was treated in the same manner as in Example 1 except that the voltage (kV) applied to the discharge electrode and the dust collection electrode and the electric power (W) were changed as shown in Table 3.
The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 4.

(Examples 27 to 30)

There was manufactured each of the exhaust gas treatment apparatus constituted as in Example 1, and exhaust gas was treated in the same manner as in Example 1 except that the flow rate (m/sec.) of exhaust gas passed through the apparatus was changed as shown in Table 4. The measurement results of the mass (g/hour) of particulate matter on the inlet side of the exhaust gas treatment apparatus during the exhaust gas treatment and the number ($\times 10^7$ particulates/sec.), mass (g/hour), and average particle diameter ($\mu$m) of particulates on the outlet side during the exhaust gas treatment are shown in Table 4.

(Discussion)

As shown in Tables 2 and 4, it was found out that, in the exhaust gas treatment apparatuses of Examples 1 to 26, particulate matter could be reduced at an extremely high ratio. In addition, even in Examples 27 to 30, where the flow rate (m/sec.) of exhaust gas was high, particulate matter could be reduced at a high ratio.
In addition, as shown in Fig. 16, it is understood that the number of particulates having relatively larger particle diameters of 0.07 to 6.27 $\mu$m increases with the passage of discharge time. This is because the particulates were bloated due to agglomeration and re-scattering of particulates. Incidentally, in Tables 2 and 4, the masses of the particulate matter on the inlet side were reduced compared with that on the outlet side. This is because the agglomerated particulates trapped on the inner wall face of the tubular body stayed in the state without being scattered again. Incidentally, the reduced mass can be confirmed by measurement of the total mass change of the tubular body before and after the measurement.
In addition, as shown in Figs. 17A to 17C, by applying a voltage on an electrode, for example, the number of particulates having relatively small particle diameters of 0.01 to 0.20 $\mu$m was reduced (see Fig. 17B), while the number of particulates having relatively large particle diameters of 1.23 $\mu$m or more was increased (see Fig. 17C).
In Figs. 18A and 18B, it is understood that the change ratio of the number of the particulates having relatively small particle diameters shows a minus value (i.e., by applying a voltage, the number is reduced), while the change ratio of the number of the particulates having relatively large particle diameters (e.g., particulates having a particle diameter of 1.23 $\mu$m or more) shows a plus value (i.e., by applying a voltage, the number is increased).
On the other hand, regarding Comparative Example 1, where no dust collection electrode is disposed, and Comparative Examples 2 to 5, the reduction ratio of the number of the particulate was low in comparison with that of the exhaust gas treatment apparatus of Example 1.

In addition, from the results of Examples 1 to 10, it is understood that, as the length of the dust collection electrode becomes long, the reduction ratio of the particulate matter becomes high, and, in comparison with the unitary type exhaust gas treatment apparatuses (Examples 1 to 5), where the discharge electrode and the dust collection electrode are unitary formed, the separation type exhaust gas treatment apparatuses (Examples 6 to 10), where the discharge electrode and the dust collection electrode are separated, had high reduction ratio of the particulate matter. Incidentally, in a separation type exhaust gas treatment apparatus, as the distance between the discharge electrode and the dust collection electrode becomes short, the reduction ratio of the number becomes high.

In addition, from the comparison of Examples 1 and 6 with Examples 13 to 16, it is understood that, as the diameter of the dust collection electrode becomes large, the reduction ratio of the particulate matter becomes high. Further, in a separation type exhaust gas treatment apparatus, as the applied voltage of the dust collection electrode is increased, the reduction ratio of the number becomes high.

Industrial Applicability

An exhaust gas treatment apparatus of the present invention can be used as an exhaust gas treatment apparatus decreasing the number of the particulates present in exhaust gas by agglomerating and bloating the particulate matter in the exhaust gas discharged from internal combustion engines such as automobile engines, construction machine engines; industrial machine stationary engine and other combustion burning appliances.

**Claims**

1. An exhaust gas treatment apparatus (la, 1b, 1c) comprising:

   a tubular body (10) functioning as a flow passage where exhaust gas (20) passes,
   a discharge electrode (12) disposed in an central portion in a cross section perpendicular to a flow direction of the flow passage inside the tubular body (10) and causing corona discharge (24) in the vicinity thereof by applying a voltage, and
   a stick-shaped dust collection electrode (14) disposed over the range of a length of at least twice the inner diameter of the tubular body (10) along the central axial direction of the flow passage on the downstream side of the discharge electrode (12) in the flow passage and generating an electric field (26) from the central axis of the flow passage to an inner wall face (10a) of the tubular body (10) ;
   wherein the number of particulates suspended in the exhaust gas (20) is decreased by charging the particulate matter (22) contained in the exhaust gas (20) passing through the tubular body (10) by corona discharge (24) caused by the discharge electrode (12), collecting the charged particulate matter (22a) on the inner wall face (10a) of the tubular body (10a) by the electric field (26) generated by the dust collection electrode (14) to agglomerate the plural particulates (22a), and allowing the agglomerated particulates (22b) to scatter again.

2. The exhaust gas treatment apparatus (la, 1b, 1c) according to Claim 1, wherein the length in the central axial direction of the flow passage of the dust collection electrode (14) is within the range of twice to five times the inner diameter of the tubular body (10).

3. The exhaust gas treatment apparatus (la, 1b, 1c) according to Claim 1 or 2, wherein the discharge electrode (12) has a disc-like electrode support (12a) disposed perpendicularly to the flow direction of the flow passage and a needle-like discharger (12b) disposed perpendicularly to the electrode support (12a).

4. The exhaust gas treatment apparatus (la, 1b, 1c) according to any one of Claims 1 to 3, wherein the discharge electrode (12) and the dust collection electrode (14) are disposed in an electrically connected state, and a voltage is applied to one of the discharge electrode (12) and the dust collection electrode (14) to apply a voltage on each of the electrodes (12, 14).

5. The exhaust gas treatment apparatus (la, 1b, 1c) according to any one of Claims 1 to 3, wherein the discharge electrode (12) and the dust collection electrode (14) are disposed in an electrically connected state, and a voltage is applied to each of the electrodes (12, 14) independently.

6. The exhaust gas treatment apparatus (1a, 1b, 1c) according to any one of Claims 1 to 5, wherein the dust collection electrode (14) is formed so that a diameter in a cross section perpendicular to the flow direction of the flow passage is 0.1 to 0.5 times the inner diameter of the tubular body (10).

7. The exhaust gas treatment apparatus (1a, 1b, 1c) according to any one of Claims 1 to 6, which is further provided with a second discharge electrode (32) disposed in the central portion in a cross section perpendicular to the flow direction of the flow passage on the downstream side of the tip on the flow passage upstream side of the dust collection electrode (14) and causing corona discharge (24) in the vicinity thereof by applying a voltage.

8. The exhaust gas treatment apparatus (la, 1b, 1c) according to any one of Claims 1 to 7, wherein at least one of the discharge electrode (12) and the dust collection electrode (14) is supported in the central portion of the fluid passage by a porcelain bushing (16) passing through the wall face of the tubular body (10) and being extended up to the central portion in a cross section perpendicular to the flow direction of the flow passage.

9. The exhaust gas treatment apparatus (1a, 1b, 1c) according to Claim 8, wherein the porcelain bushing (16) has groove-shaped unevenness (34) formed on the surface thereof.

10. An exhaust system of a vehicle provided with a gasoline engine as a drive mechanism and including an exhaust gas treatment apparatus (la, 1b, 1c) according to any one of Claims 1 to 9.

**Patentansprüche**

1. Abgasaufbereitungsvorrichtung (1a, 1b, 1c), die Folgendes umfasst:

einen röhrenförmigen Körper (10), der als Durchströmungsdurchlass fungiert, durch den Abgas (20) hindurchströmt,
eine Entladungselektrode (12), die in einem zentralen Abschnitt in einem Querschnitt im rechten Winkel auf die Strömungsrichtung des Durchströmungsdurchlasses im Inneren des röhrenförmigen Körpers (10) angeordnet ist und durch das Anlegen einer Spannung eine Koronaentladung (24) in ihrer Umgebung hervorruft, und
eine stabförmige Staubauffangelektrode (14), die über einen Längenbereich, der zumindest dem Doppelten des Innendurchmessers des röhrenförmigen Körpers (10) entspricht, entlang der Mittelachsenrichtung des Durchströmungsdurchlasses an der stromabwärts gelegenen Seite der Entladungselektrode (12) in dem Durchströmungsdurchlass angeordnet ist und ein elektrisches Feld (26) von der Mittelachse des Durchströmungsdurchlasses zu einer Innenwandfläche (10a) des röhrenförmigen Körpers (10) erzeugt;
wobei die Anzahl an Teilchen, die in dem Abgas (20) suspendiert sind, wie folgt reduziert wird: durch das Laden des teilchenförmigen Materials (22), das in dem durch den röhrenförmigen Körper (10) hindurchströmenden Abgases (20) enthalten ist, durch die durch die Entladungselektrode (12) hervorgerufene Koronaentladung (24), durch das Auffangen des geladenen teilchenförmigen Materials (22a) auf der Innenwandfläche (10a) des röhrenförmigen Körpers (10a) durch das elektrische Feld (26), das durch die Staubauffangelektrode (14) erzeugt wird, um die Vielzahl an Teilchen (22a) zu agglomerieren und das erneute Verstreuen der agglomerierten Teilchen (22b) zu ermöglichen.

2. Abgasaufbereitungsvorrichtung (1 a, 1 b, 1 c) nach Anspruch 1, worin die Länge der Staubauffangelektrode (14) in Richtung der Mittelachse des Durchströmungsdurchlasses im Bereich von der doppelten bis fünffachen Länge des Innendurchmessers des röhrenförmigen Körpers (10) liegt.

3. Abgasaufbereitungsvorrichtung (1 a, 1b, 1 c) nach Anspruch 1 oder 2, worin die Entladungselektrode (12) einen scheibenförmigen Elektrodenträger (12a), der im rechten Winkel auf die Strömungsrichtung des Durchströmungsdurchlasses angeordnet ist, und einen nadelähnlichen Entlader (12b) aufweist, der im rechten Winkel auf den Elektrodenträger (12a) angeordnet ist.

4. Abgasaufbereitungsvorrichtung (1a, 1b, 1c) nach einem der Ansprüche 1 bis 3, worin die Entladungselektrode (12) und die Staubauffangelektrode (14) in einem elektrisch verbundenen Zustand angeordnet sind und eine Spannung an eine Elektrode ausgewählt aus Entladungselektrode (12) und Staubauffangelektrode (14) angelegt wird, um eine Spannung an beide Elektroden (12, 14) anzulegen.

5. Abgasaufbereitungsvorrichtung (1a, 1b, 1 c) nach einem der Ansprüche 1 bis 3, worin die Entladungselektrode (12) und die Staubauffangelektrode (14) in einem elektrisch verbundenen Zustand angeordnet sind und eine Spannung an beide Elektroden (12, 14) unabhängig voneinander angelegt wird.

6. Abgasaufbereitungsvorrichtung (1a, 1b, 1c) nach einem der Ansprüche 1 bis 5, worin die Staubauffangelektrode

**EP 2 299 073 B1**

(14) so ausgebildet ist, dass der Durchmesser in einem Querschnitt im rechten Winkel auf die Strömungsrichtung des Durchströmungsdurchlasses dem 0,1- bis 0,5-Fachen des Innendurchmessers des röhrenförmigen Körpers (10) entspricht.

7. Abgasaufbereitungsvorrichtung (1a, 1b, 1 c) nach einem der Ansprüche 1 bis 6, die ferner mit einer zweiten Entladungselektrode (32) bereitgestellt ist, die in dem zentralen Abschnitt in einem Querschnitt im rechten Winkel auf die Strömungsrichtung des Durchströmungsdurchlasses an der stromabwärts gelegenen Seite der Spitze der Staubauffangelektrode (14) an der stromaufwärts gelegenen Seite des Durchströmungsdurchlasses angeordnet ist und durch das Anlegen einer Spannung eine Koronaentladung (24) in ihrer Umgebung bewirkt.

8. Abgasaufbereitungsvorrichtung (1a, 1b, 1 c) nach einem der Ansprüche 1 bis 7, worin zumindest eine Elektrode ausgewählt aus Entladungselektrode (12) und Staubauffangelektrode (14) in dem zentralen Abschnitt des Durchströmungsdurchlasses durch eine Porzellandurchführung (16) getragen wird, die durch die Wandfläche des röhrenförmigen Körpers (10) verläuft und sich bis zu dem zentralen Abschnitt in einem Querschnitt im rechten Winkel auf die Strömungsrichtung des Durchströmungsdurchlasses erstreckt.

9. Abgasaufbereitungsvorrichtung (1a, 1b, 1 c) nach Anspruch 8, worin die Porzellandurchführung (16) eine rillenförmige Unebenheit (34) auf ihrer Oberfläche ausgebildet aufweist.

10. Abgassystem eines Fahrzeugs, das mit einem Benzinmotor als Antriebsmechanismus bereitgestellt ist, wobei das Abgassystem eine Abgasaufbereitungsvorrichtung (1a, 1b, 1 c) nach einem der Ansprüche 1 bis 9 umfasst.

**Revendications**

1. Appareil de traitement de gaz d'échappement (la, 1b, 1c) comprenant :

un corps tubulaire (10) fonctionnant en tant que passage d'écoulement où le gaz d'échappement (20) passe, une électrode de décharge (12) disposée dans une partie centrale dans une section transversale perpendiculaire à une direction d'écoulement du passage d'écoulement à l'intérieur du corps tubulaire (10) et provoquant une décharge corona (24) dans le voisinage de celle-ci par l'application d'une tension, et
une électrode de collecte de poussière en forme de bâton (14) disposée dans la plage d'une longueur d'au moins deux fois le diamètre interne du corps tubulaire (10) le long de la direction axiale centrale du passage d'écoulement du côté aval de l'électrode de décharge (12) dans le passage d'écoulement et générant un champ électrique (26) de l'axe central du passage d'écoulement vers une face de paroi interne (10a) du corps tubulaire (10) ;
dans lequel le nombre de particules en suspension dans le gaz d'échappement (20) est diminué en chargeant la matière particulaire (22) contenue dans le gaz d'échappement (20) passant à travers le corps tubulaire (10) par la décharge corona (24) provoquée par l'électrode de décharge (12), en collectant la matière particulaire chargée (22a) sur la face de paroi interne (10a) du corps tubulaire (10a) par le champ électrique (26) généré par l'électrode de collecte de poussière (14) pour agglomérer la pluralité de particules (22a), et en permettant aux particules agglomérées (22b) de se disperser de nouveau.

2. Appareil de traitement de gaz d'échappement (la, 1b, 1c) selon la revendication 1, dans lequel la longueur dans la direction axiale centrale du passage d'écoulement de l'électrode de collecte de poussière (14) est dans la plage de deux fois à cinq fois le diamètre interne du corps tubulaire (10).

3. Appareil de traitement de gaz d'échappement (la, 1b, 1c) selon la revendication 1 ou 2, dans lequel l'électrode de décharge (12) comporte un support d'électrode en forme de disque (12a) disposé perpendiculairement à la direction d'écoulement du passage d'écoulement et un dispositif de décharge de type aiguille (12b) disposé perpendiculairement au support d'électrode (12a).

4. Appareil de traitement de gaz d'échappement (la, 1b, 1c) selon l'une quelconque des revendications 1 à 3, dans lequel l'électrode de décharge (12) et l'électrode de collecte de poussière (14) sont disposées dans un état connectées électriquement, et une tension est appliquée à l'une de l'électrode de décharge (12) et de l'électrode de collecte de poussière (14) pour appliquer une tension à chacune des électrodes (12, 14).

5. Appareil de traitement de gaz d'échappement (la, 1b, 1c) selon l'une quelconque des revendications 1 à 3, dans

22

lequel l'électrode de décharge (12) et l'électrode de collecte de poussière (14) sont disposées dans un état connectées électriquement, et une tension est appliquée à chacune des électrodes (12, 14) de manière indépendante.

6. Appareil de traitement de gaz d'échappement (la, 1b, 1c) selon l'une quelconque des revendications 1 à 5, dans lequel l'électrode de collecte de poussière (14) est formée de sorte qu'un diamètre dans une section transversale perpendiculaire à la direction d'écoulement du passage d'écoulement soit égal à 0,1 à 0,5 fois le diamètre interne du corps tubulaire (10).

7. Appareil de traitement de gaz d'échappement (la, 1b, 1c) selon l'une quelconque des revendications 1 à 6, qui est en outre pourvu d'une deuxième électrode de décharge (32) disposée dans la partie centrale dans une section transversale perpendiculaire à la direction d'écoulement du passage d'écoulement du côté aval de l'extrémité du côté amont du passage d'écoulement de l'électrode de collecte de poussière (14) et provoquant une décharge corona (24) dans le voisinage de celle-ci par l'application d'une tension.

8. Appareil de traitement de gaz d'échappement (la, 1b, 1c) selon l'une quelconque des revendications 1 à 7, dans lequel au moins l'une de l'électrode de décharge (12) et de l'électrode de collecte de poussière (14) est supportée dans la partie centrale du passage de fluide par une douille en porcelaine (16) passant à travers la face de paroi du corps tubulaire (10) et s'étendant jusqu'à la partie centrale dans une section transversale perpendiculaire à la direction d'écoulement du passage d'écoulement.

9. Appareil de traitement de gaz d'échappement (la, 1b, 1c) selon la revendication 8, dans lequel la douille en porcelaine (16) comporte une irrégularité en forme de gorges (34) formée sur la surface de celle-ci.

10. Système d'échappement d'un véhicule pourvu d'un moteur à essence en tant que mécanisme d'entraînement et comprenant un appareil de traitement de gaz d'échappement (la, 1b, 1c) selon l'une quelconque des revendications 1 à 9.

FIG.1

<u>1a</u>

18

16

10

FIG.2

A

<u>1a</u>

18

16

12b

10

12b

12

10a

12a

A'

FIG.3

1a

18

10

10

10a

14

12 (12a)

20

20

FIG.4

EP 2 299 073 B1

FIG.5                                                    12

12a

12b        12b

FIG.6                                                    12

12a

12b      12b        12b        12b

FIG.7

EP 2 299 073 B1

FIG.8

FIG.9

16

34

34

FIG.10

16

FIG.11

16

FIG.12

16

<u>1c</u>

FIG.13

10

16

18

10

10a    32    10    14    12

FIG.14

EP 2 299 073 B1

FIG.15A

FIG.15B

FIG.15C

Number of discharged particulates (particulates/ sec.)

0.007~6.27[$\mu$ m]   (total number)

Time (sec.)

FIG.15D

Number of discharged particulates (particulates/ sec.)

0.007~0.014[$\mu$ m]

0.014~0.07[$\mu$ m]

0.007~6.27[$\mu$ m]   (total number)

0.07~6.27[$\mu$ m]

Time (sec.)

FIG.16

Number of discharged particulates (particulates/sec.)

0.07~6.27[μm]

Time (sec.)

FIG.17A

Number of discharged particulates (particulates/sec.)

Before application
Right after application
7 minutes after application
After switching off

Particle diameter (μm)

FIG.17B

FIG.17C

FIG.18A

Change ratio from before application (%)

Particle diameter (μm)

Right after application
7 minutes after application
After switching off

FIG.18B

Change ratio from before application (%)

Particle diameter (μm)

Right after application
7 minutes after application
After switching off

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001041024 A
- JP 2005320955 A
- JP 2005324094 A
- JP 2006029267 A
- EP 1528230 A